# EUROPEAN PATENT APPLICATION

(11) **EP 3 968 685 A1**
(43) Date of publication of application: **16.03.2022**
(21) Application number: 20856547.3
(22) Date of filing: 27.08.2020
(51) Int. Cl.: H04W 24/02, H04L 12/24

(54) **NETWORK SLICE MANAGEMENT METHOD AND RELATED DEVICE**

(30) Priority: 27.08.2019 CN 201910797220
(71) Applicant: Huawei Technologies Co., Ltd., Shenzhen, Guangdong 518129 (CN)
(72) Inventor: HU, Xiang, Shenzhen, Guangdong 518129 (CN)
(74) Representative: Pfenning, Meinig & Partner mbB
(86) International application number: PCT/CN2020/111919
(87) International publication number: WO 2021/037175

(57) **Abstract**

A network slice management method is disclosed and includes: User equipment sends a network slice creation request message to a first network device, where the network slice creation request message carries a first slice type and a first service-level agreement SLA specification requirement, and the network slice creation request message is used to request to create a network slice instance that meets the first SLA specification requirement and the first slice type. The user equipment receives a network slice creation response message sent by the first network device, where the network slice creation response message carries a first identifier, the first identifier is used to determine a first network slice instance corresponding to the first identifier, and the first network slice instance is created by the first network device based on the network slice creation request message. In embodiments of this application, a terminal user can customize a dedicated network slice.

## Description

This application claims priority to Chinese Patent Application No. 201910797220.4, filed with the China National Intellectual Property Administration on August 27, 2019 and entitled "NETWORK SLICE MANAGEMENT METHOD AND RELATED APPARATUS", which is incorporated herein by reference in its entirety.

### TECHNICAL FIELD

This application relates to the field of electronic technologies, and in particular, to a network slice management method and a related apparatus.

### BACKGROUND

In a current slice management framework, a telecom operator plans various types of network slices by using a communication service management function (communication service management function, CSMF) at a business support system (business support system, BSS) layer, deploys and manages the slices by using a network slice management function (network slice management function, NSMF) entity at an operation support system (operation support system, OSS) layer, and then delivers a slice selection policy to a fifth generation mobile communication system (5th-Generation, 5G) terminal. The 5G terminal matches slice selection policies for different Apps (Applications) to implement slice-based session management and service access. Current slice planning and design are based on a service scenario of the telecom operator and an enterprise dedicated network, and are applicable to a slice network in which a large quantity of users support a specific SLA requirement specification. The network slice planned by the telecom operator generally provides a unified network slice instance and a corresponding service-level agreement (Service-Level Agreement, SLA) specification for a type of users, for example, enhanced mobile broadband (enhanced mobile broadband, eMBB) (mobile internet for a public user), ultra-reliable and low-latency communication (ultra-reliable & low-latency communication, URLLC) (URLLC-based internet of vehicles or URLLC-based telemedicine), or massive internet of things (massive internet of things, IoT), which cannot meet a dedicated SLA service requirement of a terminal user.

### SUMMARY

Embodiments of this application provide a network slice management method and a related apparatus, to enable a terminal user to customize a dedicated network slice.

According to a first aspect, this application provides a network slice management method. The method includes: User equipment sends a network slice creation request message to a first network device, where the network slice creation request message carries a first slice type and a first SLA specification requirement, and the network slice creation request message is used to request to create a network slice instance that meets the first SLA specification requirement and the first slice type. The user equipment receives a network slice creation response message from the first network device, where the network slice creation response message carries a first identifier, the first identifier is used to determine a first network slice instance corresponding to the first identifier, and the first network slice instance is created by the first network device based on the network slice creation request message. In this way, a terminal user can customize a dedicated network slice.

In the method described in the first aspect, the user equipment sends the network slice creation request message to the first network device, where the network slice creation request message carries the first slice type and the first service-level agreement SLA specification requirement. The first network device creates the network slice instance that meets the first SLA specification requirement and the first slice type, and sends the network slice creation response message to the user equipment, where the network slice creation response message carries the first identifier, and the first identifier is used to determine the first network slice instance corresponding to the first identifier. In this way, the terminal user customizes the dedicated network slice.

In an implementation, before the user equipment sends the network slice creation request message to the first network device, the method further includes: The user equipment determines the first slice type and the first SLA specification requirement. The user equipment queries whether a network slice that meets the first slice type and the first SLA specification requirement exists in a dedicated network slice of a user of the user equipment and a public network slice, where the dedicated network slice of the user includes a network slice that is created by the user and that provides a service only for the user. That user equipment sends a network slice creation request message to a first network device includes: The user equipment sends the network slice creation request message to the first network device if the network slice that meets the first slice type and the first SLA specification requirement does not exist in the dedicated network slice of the user and the public network slice.

In an implementation, after the user equipment receives the network slice creation response message from the first network device, the method further includes: The user equipment sends a session establishment request message to a third network device, where the session establishment request message carries the first identifier.

In an implementation, that the user equipment sends a session establishment request message to a third network device includes: The user equipment sends the session establishment request message to the third network device by using a fourth network device, where the third network device is determined by the fourth network device based on the first identifier.

In an implementation, that the user equipment sends a session establishment request message to a third network device includes: The user equipment sends the session establishment request message to the third network device by using a fourth network device, where the third network device is determined by the fourth network device by querying a fifth network device based on the first identifier.

In an implementation, the network slice creation request message further carries charging information, and the charging information is used to calculate a bill of the service provided by the first network slice instance for the user.

In an implementation, after the user equipment receives the network slice creation response message from the first network device, the method further includes: The user equipment sends a network slice update request message to the first network device, where the network slice update request message carries the first identifier and a second SLA specification requirement, and the network slice update request message is used to request to update the first network slice instance based on the second SLA specification requirement.

In an implementation, after the user equipment receives the network slice creation response message from the first network device, the method further includes: The user equipment sends a network slice deletion request message to the first network device, where the network slice deletion request message carries the first identifier, and the network slice deletion request message is used to request to delete the first network slice instance.

In an implementation, that user equipment sends a network slice creation request message to a first network device includes: The user equipment sends the network slice creation request message to the first network device by using a second network device. That the user equipment receives a network slice creation response message from the first network device includes: The user equipment receives the network slice creation response message from the first network device by using the second network device.

In an implementation, that the user equipment sends a network slice update request message to the first network device includes: The user equipment sends the network slice update request message to the first network device by using the second network device.

In an implementation, that the user equipment sends a network slice deletion request message to the first network device includes: The user equipment sends the network slice deletion request message to the first network device by using the second network device.

In an implementation, the second network device includes a network exposure function (network exposure function, NEF) entity, a service provisioning gateway (service provisioning gateway, SPG), an access and mobility management function (access and mobility management function, AMF) entity, a CSMF, a slice management function (network slice management function, NSMF), or a slice subnet management function (network slice subnet management function, NSSMF).

In an implementation, a message between the user equipment and the second network device is transmitted by using non-access stratum (non-access-stratum, NAS) signaling, and the second network device is an AMF.

In an implementation, the first network device includes an NSMF and/or an NSSMF.

In an implementation, the third network device is a session management function (session management function, SMF) entity.

In an implementation, the fourth network device is an AMF.

In an implementation, the fifth network device is a network slice selection function (network slice selection function, NSSF) entity.

According to a second aspect, this application provides a network slice management method. The method includes: A first network device receives a network slice creation request message from user equipment, where the network slice creation request message carries a first slice type and a first SLA specification requirement. The first network device creates a first network slice instance that meets the first slice type and the first SLA specification requirement. The first network device sends a network slice creation response message to the user equipment, where the network slice creation response message carries a first identifier, and the first identifier is used to determine the first network slice instance corresponding to the first identifier.

In the method described in the second aspect, the first network device receives the network slice creation request message from the user equipment, where the network slice creation request message carries the first slice type and the first SLA specification requirement. The first network device creates the first network slice instance that meets the first slice type and the first SLA specification requirement, and sends the network slice creation response message to the user equipment. In this way, a terminal user customizes a dedicated network slice.

In an implementation, that the first network device creates a first network slice instance that meets the first slice type and the first SLA specification requirement includes: The first network device creates the first network slice instance that meets the first slice type and the first SLA specification requirement, and generates an identifier of the first network slice instance, where the identifier of the first network slice instance is used by a network device to determine the first network slice instance. Optionally, the identifier of the first network slice instance may alternatively be used by the network device to determine a mapping relationship between the first identifier and the identifier of the first network slice instance.

In an implementation, after the first network device creates the first network slice instance based on the network slice creation request message, the method further includes: The first network device sends a first notification message to a fifth network device, where the first notification message is used to notify the fifth network device that the first network slice instance can provide a service.

In an implementation, the first notification message includes the first identifier and the identifier of the first network slice instance.

In an implementation, the network slice creation request message further carries charging information, and the charging information is used to calculate a bill of the service provided by the first network slice instance for the user.

In an implementation, after the first network device sends the network slice creation response message to the user equipment, the method further includes: The first network device receives a network slice update request message from the user equipment, where the network slice update request message carries the first identifier and a second SLA specification requirement. The first network device updates, based on the second SLA specification requirement, the first network slice instance corresponding to the first identifier.

In an implementation, after the first network device receives the network slice update request message from the user equipment, the method further includes: The first network device determines whether the first network slice instance is a dedicated network slice of a user of the user equipment, where the dedicated network slice of the user includes a network slice that is created by the user and that provides the service only for the user. That the first network device updates, based on the second SLA specification requirement, the first network slice instance corresponding to the first identifier includes: The first network device updates, based on the second SLA specification requirement, the first network slice instance corresponding to the first identifier if the first network slice instance is the dedicated network slice of the user of the user equipment.

In an implementation, after the first network device sends the network slice creation response message to the user equipment, the method further includes: The first network device receives a network slice deletion request message from the user equipment, where the network slice deletion request message carries the first identifier. The first network device deletes the first network slice instance corresponding to the first identifier.

In an implementation, after the first network device receives the network slice deletion request message from the user equipment, the method further includes: The first network device determines whether the first network slice instance is the dedicated network slice of the user of the user equipment. That the first network device deletes the first network slice instance corresponding to the first identifier includes: The first network device deletes the first network slice instance corresponding to the first identifier if the first network slice instance is the dedicated network slice of the user of the user equipment.

In an implementation, after the first network device receives the network slice creation request message from the user equipment, and before the first network device sends the network slice creation response message to the user equipment, the method further includes: The first network device generates the first identifier.

In an implementation, after the first network device deletes the first network slice instance based on the first identifier, the method further includes: The first network device sends a second notification message to the fifth network device, where the second notification message is used to notify the fifth network device that the first network slice instance has been deleted.

In an implementation, the second notification message includes the first identifier and the identifier of the first network slice instance.

In an implementation, that a first network device receives a network slice creation request message from user equipment includes: The first network device receives the network slice creation request message from the user equipment by using a second network device. That the first network device sends a network slice creation response message to the user equipment includes: The first network device sends the network slice creation response message to the user equipment by using the second network device.

In an implementation, that the first network device receives a network slice update request message from the user equipment includes: The first network device receives the network slice update request message from the user equipment by using the second network device.

In an implementation, that the first network device receives a network slice deletion request message from the user equipment includes: The first network device receives the network slice deletion request message from the user equipment by using the second network device.

In an implementation, the second network device includes an NEF, an SPG, an AMF, a CSMF, an NSMF, or an NSMF.

In an implementation, the first network device is an NSMF and/or an NSSMF.

In an implementation, the fifth network device is an NSSF.

According to a third aspect, this application provides a network slice management method. The method includes: A second network device receives a network slice creation request message from user equipment, where the network slice creation request message carries a first slice type and a first SLA specification requirement, and the network slice creation request message is used to create a network slice that meets the first slice type and the SLA specification requirement. The second network device sends the network slice creation request message to a first network device. The second network device receives a network slice creation response message from the first network device, where the network slice creation response message carries a first identifier, the first identifier is used by the user equipment to determine a first network slice instance corresponding to the first identifier, and the first network slice instance is created by the first network device based on the network slice creation request message. The second network device sends the network slice creation response message to the user equipment.

In the method described in the second aspect, the second network device receives the network slice creation request message from the user equipment, where the network slice creation request message carries the first slice type and the first SLA specification requirement. The second network device sends the network slice creation request message to the first network device. The first network device creates the first network slice instance based on the network slice creation request message. In this way, a terminal user customizes a dedicated network slice.

In an implementation, the network slice creation request message further carries charging information, and the network slice creation request message is used to request to create a network slice instance that meets the first slice type, the SLA specification requirement, and the charging information.

In an implementation, the network slice creation request message further carries charging information, and the charging information is used by the second network device to calculate a bill of a service provided by the first network slice instance for a user of the user equipment.

In an implementation, the network slice creation request message further carries an authentication code. After the second network device receives the network slice creation request message from the user equipment, the method further includes: The second network device authenticates, based on the authentication code, whether the user has authorization for network slice creation. That the second network device sends the network slice creation request message to a first network device includes: The second network device sends the network slice creation request message to the first network device if authentication succeeds.

In an implementation, that the second network device authenticates, based on the authentication code, whether the user has authorization for network slice creation includes: The authentication code is a user identifier of the user. The second network device queries subscription information of the user based on the user identifier. Authentication that the user has authorization for network slice creation and that is performed by the second network device succeeds if the subscription information of the user includes authorization for network slice creation, or authentication fails if the subscription information of the user does not include authorization for network slice creation.

In an implementation, that the second network device authenticates, based on the authentication code, whether the user has authorization for network slice creation includes: The authentication code is a user identifier and a first authorization code. The second network device locally queries a second authorization code corresponding to the user identifier. Authentication that the user has authorization for network slice creation and that is performed by the second network device succeeds if the second authorization code is consistent with the first authorization code, or authentication fails if the second authorization code is not consistent with the first authorization code.

In an implementation, that the second network device authenticates, based on the authentication code, whether the user has authorization for network slice creation includes: The authentication code is a first account and a first password of the user. The second network device locally queries whether the first account of the user exists. If the first account of the user exists, the second network device locally queries a second password corresponding to the first account. Authentication that the user has authorization for network slice creation and that is performed by the second network device succeeds if the second password is consistent with the first password, or authentication fails if the second password is not consistent with the first password.

In an implementation, that the second network device authenticates, based on the authentication code, whether the user has authorization for network slice creation includes: The authentication code is a user identifier and a first authorization code. The second network device sends a first authentication request message to an AUSF, where the first authentication request message is used to request the AUSF to authenticate the network slice creation request message, and the first authentication request message includes the user identifier and the first authorization code. The second network device receives a first authentication response message from the AUSF, where the first authentication response message is determined by the AUSF based on the user identifier and the first authorization code, and the first authentication response message is used to notify the second network device whether authentication on whether the user has authorization for network slice creation succeeds.

In an implementation, that the second network device authenticates, based on the authentication code, whether the user has authorization for network slice creation includes: The authentication code is a first account and a first password. The second network device sends a second authentication request message to an AUSF, where the second authentication request message includes the first account and the first password. The second network device receives a second authentication response message from the AUSF, where the second authentication response message is determined by the AUSF based on the first account and the first password, and the second authentication response message is used to notify the second network device whether authentication on whether the user has authorization for network slice creation succeeds.

In an implementation, after the second network device sends the network slice creation response message to the user equipment, the method further includes: The second network device receives a network slice update request message from the user equipment, where the network slice update request message carries the first identifier and a second SLA specification requirement, and the network slice update request message is used to request to update the first network slice instance based on the second SLA specification requirement. The second network device sends the network slice update request message to the first network device.

In an implementation, after the second network device receives the network slice update request message from the user equipment, the method further includes: The second network device determines whether the first network slice instance is a dedicated network slice of the user, where the dedicated network slice of the user includes a network slice that is created by the user and that provides the service only for the user. That the second network device sends the network slice update request message to the first network device includes: The second network device sends the network slice update request message to the first network device if the first network slice instance is the dedicated network slice of the user.

In an implementation, the network slice update request message carries an authentication code. After the second network device receives the network slice update request message from the user equipment, the method further includes: The second network device authenticates, based on the authentication code, whether the user has authorization for network slice update. That the second network device sends the network slice update request message to the first network device includes: The second network device sends the network slice update request message to the first network device if authentication succeeds.

In an implementation, after the second network device sends the network slice creation response message to the user equipment, the method further includes: The second network device receives a network slice deletion request message from the user equipment, where the network slice deletion request message carries the first identifier, and the network slice deletion request message is used to request to delete the first network slice instance. The second network device sends the network slice deletion request message to the first network device.

In an implementation, after the second network device receives the network slice deletion request message from the user equipment, the method further includes: The second network device determines whether the first network slice instance is the dedicated network slice of the user. That the second network device sends the network slice deletion request message to the first network device includes: The second network device sends the network slice deletion request message to the first network device if the first network slice instance is the dedicated network slice of the user.

In an implementation, the network slice deletion request message carries an authentication code. After the second network device receives the network slice deletion request message from the user equipment, the method further includes: The second network device authenticates, based on the authentication code, whether the user has authorization for network slice deletion. That the second network device sends the network slice deletion request message to the first network device includes: The second network device sends the network slice deletion request message to the first network device if authentication succeeds.

In an implementation, that the second network device sends the network slice creation request message to a first network device includes: The second network device sends the network slice creation request message to the first network device by using a sixth network device. That the second network device receives a network slice creation response message from the first network device includes: The second network device receives the network slice creation response message from the first network device by using the sixth network device.

In an implementation, before the second network device sends the network slice creation request message to the first network device, the method further includes: The second network device generates the first identifier. That the second network device sends the network slice creation request message to a first network device includes: The second network device sends the network slice creation request message and the first identifier to the first network device.

In an implementation, that the second network device receives a network slice creation response message from the first network device includes: The second network device receives the network slice creation response message and an identifier of the first network slice instance from the first network device, where the identifier of the first network slice instance is generated by the first network device. The second network device records a mapping relationship between the first identifier and the identifier of the first network slice instance.

In an implementation, that the second network device sends the network slice update request message to the first network device includes: The second network device sends the network slice update request message to the first network device by using the sixth network device.

In an implementation, that the second network device sends the network slice deletion request message to the first network device includes: The second network device sends the network slice deletion request message to the first network device by using the sixth network device.

In an implementation, the second network device includes an NEF, an SPG, an AMF, a CSMF, an NSMF, or an NSSMF.

In an implementation, the sixth network device is a CSMF, and the second network device includes an NEF, an SPG, or an AMF.

In an implementation, the first network device is an NSMF and/or an NSSMF.

According to a fourth aspect, an embodiment of this application provides user equipment. The user equipment may include a plurality of functional modules or units, configured to correspondingly perform the network slice management method provided in the first aspect, for example, a sending unit and a receiving unit.

The sending unit is configured to send a network slice creation request message to a first network device, where the network slice creation request message carries a first slice type and a first service-level agreement SLA specification requirement, and the network slice creation request message is used to request to create a network slice instance that meets the first SLA specification requirement and the first slice type.

The receiving unit is configured to receive a network slice creation response message from the first network device, where the network slice creation response message carries a first identifier, the first identifier is used to determine a first network slice instance corresponding to the first identifier, and the first network slice instance is created by the first network device based on the network slice creation request message.

In an implementation, the user equipment further includes a processing unit. Before the sending unit sends the network slice creation request message to the first network device, the processing unit is configured to determine the first slice type and the first SLA specification requirement, and query whether a network slice that meets the first slice type and the first SLA specification requirement exists in a dedicated network slice of a user of the user equipment and a public network slice, where the dedicated network slice of the user includes a network slice that is created by the user and that provides a service only for the user. That the sending unit sends the network slice creation request message to the first network device includes: The sending unit sends the network slice creation request message to the first network device if the network slice that meets the first slice type and the first SLA specification requirement does not exist in the dedicated network slice of the user and the public network slice.

In an implementation, after the receiving unit receives the network slice creation response message from the first network device, the sending unit is further configured to send a session establishment request message to a third network device, where the session establishment request message carries the first identifier.

In an implementation, after the receiving unit receives the network slice creation response message from the first network device, the sending unit is further configured to send a network slice update request message to the first network device, where the network slice update request message carries the first identifier and a second SLA specification requirement, and the network slice update request message is used to request to update the first network slice instance based on the second SLA specification requirement.

In an implementation, after the receiving unit receives the network slice creation response message from the first network device, the sending unit is further configured to send a network slice deletion request message to the first network device, where the network slice deletion request message carries the first identifier, and the network slice deletion request message is used to request to delete the first network slice instance.

In an implementation, that the sending unit sends the network slice creation request message to the first network device includes: The sending unit sends the network slice creation request message to the first network device by using a second network device. That the receiving unit receives the network slice creation response message from the first network device includes: The receiving unit receives the network slice creation response message from the first network device by using the second network device.

In an implementation, the second network device includes an NEF, an SPG, an AMF, a CSMF, an NSMF, or an NSSMF.

According to a fifth aspect, an embodiment of this application provides a network device. The network device may include a plurality of functional modules or units, configured to correspondingly perform the network slice management method provided in the second aspect, for example, a receiving unit, a processing unit, and a sending unit.

The receiving unit is configured to receive a network slice creation request message from user equipment, where the network slice creation request message carries a first slice type and a first SLA specification requirement.

The processing unit is configured to create a first network slice instance that meets the first slice type and the first SLA specification requirement.

The sending unit is configured to send a network slice creation response message to the user equipment, where the network slice creation response message carries a first identifier of the first network slice instance, and the first identifier is used by the user equipment to determine the first network slice instance corresponding to the first identifier.

In an implementation, after the processing unit creates the first network slice instance based on the network slice creation request message, the sending unit is further configured to send a first notification message to a fifth network device, where the first notification message is used to notify the fifth network device that the first network slice instance can provide a service.

In an implementation, after the sending unit sends the network slice creation response message to the user equipment, the receiving unit is further configured to receive a network slice update request message from the user equipment, where the network slice update request message carries the first identifier and a second SLA specification requirement. The processing unit is further configured to update, based on the second SLA specification requirement, the first network slice instance corresponding to the first identifier.

In an implementation, after the receiving unit receives the network slice update request message from the user equipment, the processing unit is further configured to determine whether the first network slice instance is a dedicated network slice of a user of the user equipment, where the dedicated network slice of the user includes a network slice that is created by the user and that provides the service only for the user. That the processing unit updates, based on the second SLA specification requirement, the first network slice instance corresponding to the first identifier includes: The processing unit updates, based on the second SLA specification requirement, the first network slice instance corresponding to the first identifier if the first network slice instance is the dedicated network slice of the user.

In an implementation, after the sending unit sends the network slice creation response message to the user equipment, the receiving unit is further configured to receive a network slice deletion request message from the user equipment, where the network slice deletion request message carries the first identifier. The processing unit is further configured to delete the first network slice instance corresponding to the first identifier.

In an implementation, after the receiving unit receives the network slice deletion request message from the user equipment, the processing unit is further configured to determine whether the first network slice instance is the dedicated network slice of the user. That the processing unit deletes the first network slice instance corresponding to the first identifier includes: The processing unit deletes the first network slice instance corresponding to the first identifier if the first network slice instance is the dedicated network slice of the user.

In an implementation, after the processing unit deletes the first network slice instance based on the first identifier, the sending unit is further configured to send a second notification message to the fifth network device, where the second notification message is used to notify the fifth network device that the first network slice instance has been deleted.

In an implementation, that the receiving unit receives the network slice creation request message from the user equipment includes: The receiving unit receives the network slice creation request message from the user equipment by using a second network device. That the sending unit sends the network slice creation response message to the user equipment includes: The sending unit sends the network slice creation response message to the user equipment by using the second network device.

In an implementation, the second network device includes an NEF, an SPG, an AMF, a CSMF, an NSMF, or an NSSMF.

According to a sixth aspect, an embodiment of this application provides a network device. The network device may include a plurality of functional modules or units, configured to correspondingly perform the network slice management method provided in the third aspect, for example, a receiving unit and a sending unit.

The receiving unit is configured to receive a network slice creation request message from user equipment, where the network slice creation request message carries a first slice type and a first SLA specification requirement, and the network slice creation request message is used to create a network slice that meets the first slice type and the SLA specification requirement.

The sending unit is configured to send the network slice creation request message to a first network device.

The receiving unit is further configured to receive a network slice creation response message from the first network device, where the network slice creation response message carries a first identifier, the first identifier is used to determine a first network slice instance corresponding to the first identifier, and the first network slice instance is created by the first network device based on the network slice creation request message.

The sending unit is further configured to send the network slice creation response message to the user equipment.

In an implementation, the user equipment further includes a processing unit. The network slice creation request message further carries an authentication code. After the receiving unit receives the network slice creation request message from the user equipment, the processing unit is configured to authenticate, based on the authentication code, whether a user has authorization for network slice creation.

That the sending unit sends the network slice creation request message to the first network device includes: The sending unit sends the network slice creation request message to the first network device if authentication succeeds.

In an implementation, that the processing unit authenticates, based on the authentication code, whether the user has authorization for network slice creation includes: The authentication code is a user identifier of the user. The processing unit queries subscription information of the user based on the user identifier. Authentication that the user has authorization for network slice creation and that is performed by the processing unit succeeds if the subscription information of the user includes authorization for network slice creation, or authentication fails if the subscription information of the user does not include authorization for network slice creation.

Alternatively, the authentication code is a user identifier and a first authorization code. The processing unit locally queries a second authorization code corresponding to the user identifier. Authentication that the user has authorization for network slice creation and that is performed by the processing unit succeeds if the second authorization code is consistent with the first authorization code, or authentication fails if the second authorization code is not consistent with the first authorization code.

Alternatively, the authentication code is a first account and a first password of the user. The processing unit locally queries whether the first account of the user exists. If the first account of the user exists, the processing unit locally queries a second password corresponding to the first account. Authentication that the user has authorization for network slice creation and that is performed by the processing unit succeeds if the second password is consistent with the first password, or authentication fails if the second password is not consistent with the first password.

Alternatively, the authentication code is a user identifier and a first authorization code. The sending unit sends a first authentication request message to an authentication server function AUSF entity, where the first authentication request message is used to request the AUSF to authenticate whether the user has authorization for network slice creation, and the first authentication request message includes the user identifier and the first authorization code. The receiving unit receives a first authentication response message from the AUSF, where the first authentication response message is determined by the AUSF based on the user identifier and the first authorization code, and the first authentication response message is used to notify a second network device whether authentication on whether the user has authorization for network slice creation succeeds.

Alternatively, the authentication code is a first account and a first password. The sending unit sends a second authentication request message to an AUSF, where the second authentication request message includes the first account and the first password. The receiving unit receives a second authentication response message from the AUSF, where the second authentication response message is determined by the AUSF based on the first account and the first password, and the second authentication response message is used to notify a second network device whether authentication on whether the user has authorization for network slice creation succeeds.

In an implementation, after the sending unit sends the network slice creation response message to the user equipment, the receiving unit is further configured to receive a network slice update request message from the user equipment, where the network slice update request message carries the first identifier and a second SLA specification requirement, and the network slice update request message is used to request to update the first network slice instance based on the second SLA specification requirement. The sending unit is further configured to send the network slice update request message to the first network device.

In an implementation, after the receiving unit receives the network slice update request message from the user equipment, the processing unit is further configured to determine whether the first network slice instance is a dedicated network slice of the user, where the dedicated network slice of the user includes a network slice that is created by the user and that provides a service only for the user. That the sending unit sends the network slice update request message to the first network device includes: The sending unit sends the network slice update request message to the first network device if the first network slice instance is the dedicated network slice of the user.

In an implementation, the network slice update request message carries an authentication code. After the receiving unit receives the network slice update request message from the user equipment, the processing unit is further configured to authenticate, based on the authentication code, whether the user has authorization for network slice update. That the sending unit is further configured to send the network slice update request message to the first network device includes: The sending unit sends the network slice update request message to the first network device if authentication succeeds.

In an implementation, after the sending unit sends the network slice creation response message to the user equipment, the receiving unit is further configured to receive a network slice deletion request message from the user equipment, where the network slice deletion request message carries the first identifier, and the network slice deletion request message is used to request to delete the first network slice instance. The sending unit is further configured to send the network slice deletion request message to the first network device.

In an implementation, after the receiving unit receives the network slice deletion request message from the user equipment, the processing unit is further configured to determine whether the first network slice instance is the dedicated network slice of the user. That the sending unit sends the network slice deletion request message to the first network device includes: The sending unit sends the network slice deletion request message to the first network device if the first network slice instance is the dedicated network slice of the user.

In an implementation, the network slice deletion request message carries an authentication code. After the receiving unit receives the network slice deletion request message from the user equipment, the processing unit is further configured to authenticate, based on the authentication code, whether the user has authorization for network slice deletion. That the sending unit sends the network slice deletion request message to the first network device includes: The sending unit sends the network slice deletion request message to the first network device if authentication succeeds.

In an implementation, that the sending unit sends the network slice creation request message to the first network device includes: The sending unit sends the network slice creation request message to the first network device by using a sixth network device, where the sixth network device is a communication service management function CSMF entity. That the receiving unit receives the network slice creation response message from the first network device includes:

The receiving unit receives the network slice creation response message from the first network device by using the sixth network device.

According to a seventh aspect, an embodiment of this application provides user equipment, configured to perform the network slice management method provided in the first aspect. The user equipment may include a memory, a processor, a transmitter, and a receiver. The transmitter and the receiver are configured to communicate with another communication device (for example, a network device or a first communication device). The memory is configured to store code for implementing the network slice management method provided in the first aspect; and the processor is configured to execute program code stored in the memory, that is, perform the network slice management method provided in the first aspect.

According to an eighth aspect, an embodiment of this application provides a network device, configured to perform the network slice management method provided in the second aspect. The network device may include a memory, a processor, a transmitter, and a receiver. The transmitter and the receiver are configured to communicate with another communication device (for example, a network device or a second communication device). The memory is configured to store code for implementing the network slice management method provided in the second aspect. The processor is configured to execute program code stored in the memory, that is, perform the network slice management method provided in the second aspect.

According to a ninth aspect, an embodiment of this application provides a network device, configured to perform the network slice management method provided in the third aspect. The network device may include a memory, a processor, a transmitter, and a receiver. The transmitter and the receiver are configured to communicate with another communication device (for example, a network device or a second communication device). The memory is configured to store code for implementing the network slice management method provided in the third aspect. The processor is configured to execute program code stored in the memory, that is, perform the network slice management method provided in the third aspect.

According to a tenth aspect, an embodiment of this application provides a communication system. The communication system includes user equipment, a first network device, and a second network device.

The user equipment may be the user equipment described in the fourth aspect, or may be the user equipment described in the seventh aspect.

The first network device may be the network device described in the fifth aspect, or may be the network device described in the eighth aspect.

The second network device may be the network device described in the sixth aspect, or may be the network device described in the ninth aspect.

According to an eleventh aspect, this application provides a communication chip. The communication chip may include a processor and one or more interfaces coupled to the processor. The processor may be configured to: invoke, from a memory, a program for implementing the network slice management method provided in the first aspect; and execute instructions included in the program. The interface may be configured to output a data processing result of the processor.

According to a twelfth aspect, this application provides a communication chip. The communication chip may include a processor and one or more interfaces coupled to the processor. The processor may be configured to: invoke, from a memory, a program for implementing the network slice management method provided in the second aspect; and execute instructions included in the program. The interface may be configured to output a data processing result of the processor.

According to a thirteenth aspect, this application provides a communication chip. The communication chip may include a processor and one or more interfaces coupled to the processor. The processor may be configured to: invoke, from a memory, a program for implementing the network slice management method provided in the third aspect; and execute instructions included in the program. The interface may be configured to output a data processing result of the processor.

According to a fourteenth aspect, an embodiment of this application provides a computer-readable storage medium. The readable storage medium stores instructions. When the instructions are run on a processor, the processor is enabled to perform the network slice management method described in the first aspect.

According to a fifteenth aspect, an embodiment of this application provides a computer-readable storage medium. The readable storage medium stores instructions. When the instructions are run on a processor, the processor is enabled to perform the network slice management method described in the second aspect.

According to a sixteenth aspect, an embodiment of this application provides a computer-readable storage medium. The readable storage medium stores instructions. When the instructions are run on a processor, the processor is enabled to perform the network slice management method described in the third aspect.

According to a seventeenth aspect, an embodiment of this application provides a computer program product that includes instructions. When the computer program product runs on a processor, the processor is enabled to perform the network slice management method described in the first aspect.

According to an eighteenth aspect, an embodiment of this application provides a computer program product that includes instructions. When the computer program product runs on a processor, the processor is enabled to perform the network slice management method described in the second aspect.

According to a nineteenth aspect, an embodiment of this application provides a computer program product that includes instructions. When the computer program product runs on a processor, the processor is enabled to perform the network slice management method described in the third aspect.

### BRIEF DESCRIPTION OF DRAWINGS

FIG. 1 is a schematic diagram of a system architecture of a communication system according to an embodiment of this application;
FIG. 2 is a schematic architectural diagram of a slice architecture according to an embodiment of this application;
FIG. 3 is a schematic flowchart of a network slice management method according to an embodiment of this application;
FIG. 4 is a schematic flowchart of another network slice management method according to an embodiment of this application;
FIG. 5 is a schematic flowchart of another network slice management method according to an embodiment of this application;
FIG. 6 is a schematic flowchart of another network slice management method according to an embodiment of this application;
FIG. 7 is a schematic flowchart of another network slice management method according to an embodiment of this application;
FIG. 8 is a schematic flowchart of another network slice management method according to an embodiment of this application;
FIG. 9 is a schematic flowchart of another network slice management method according to an embodiment of this application;
FIG. 10 is a schematic flowchart of another network slice management method according to an embodiment of this application;
FIG. 11 is a schematic flowchart of another network slice management method according to an embodiment of this application;
FIG. 12 is a schematic flowchart of another network slice management method according to an embodiment of this application;
FIG. 13 is a schematic flowchart of another network slice management method according to an embodiment of this application;
FIG. 14 is a schematic diagram of a structure of user equipment according to an embodiment of this application; and
FIG. 15 is a schematic diagram of a structure of a network device according to an embodiment of this application.

### DESCRIPTION OF EMBODIMENTS

The following clearly describes technical solutions of embodiments in this application in detail with reference to accompanying drawings. In descriptions of the embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of' means two or more than two.

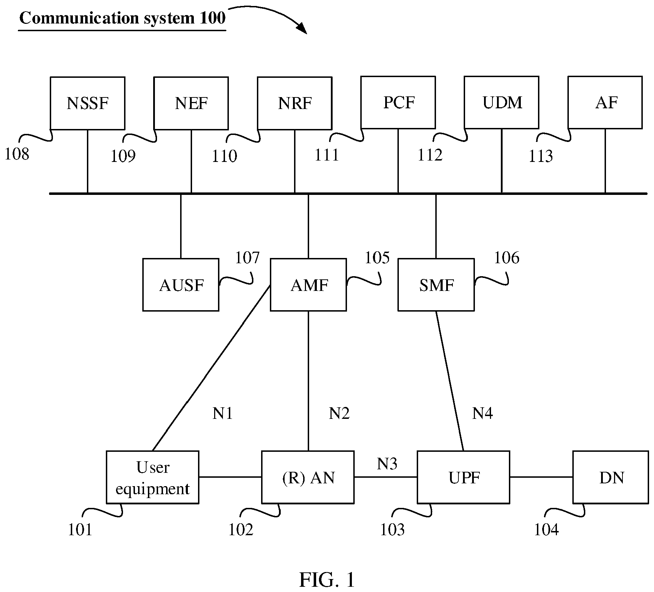

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of" means two or more. FIG. 1 shows a network architecture of a communication system 100 according to an embodiment of this application. As shown in FIG. 1, the communication system 100 may include user equipment (user equipment, UE) 101, a (Radio) access network (access network, AN) device 102, a user plane function (user plane function, UPF) entity 103, a data network (data network, DN) device 104, an AMF 105, an SMF 106, an authentication server function (authentication server function, AUSF) entity 107, an NSSF 108, an NEF 109, a network repository function (NF repository function, NRF) entity 110, a policy control function (policy control function, PCF) entity 111, a unified data management (unified data management, UDM) entity 112, and an application function (application function, AF) entity 113.

The UE 101 may be distributed in the entire communication system 100, and may be static or mobile. In some embodiments of this application, the UE 101 may be a mobile device, a mobile station (mobile station), a mobile unit (mobile unit), an M2M terminal, a radio unit, a remote unit, a terminal agent, a mobile client, or the like. This is not limited in this embodiment of this application.

The (R)AN 102 may be a 5G base station, an NR base station, or the like, and the UE 101 may access the communication system 100 by using the (R)AN 102. Alternatively, the (R)AN 102 may be a network including a plurality of (R)AN 102 nodes, and may implement functions such as a radio physical layer function, resource scheduling, and radio resource management. The (R)AN 102 is connected to the UPF 103 through a user plane interface N3, to transmit data of the UE 101. The AN establishes a control plane signaling connection to the AMF 105 through a control plane interface N2, to implement functions such as radio access bearer control.

The UPF 103 may be used for functions such as packet routing and forwarding, QoS processing of a user plane, uplink traffic verification, transport-level packet marking in an uplink and a downlink, downlink data packet buffering, and downlink data notification triggering. The UPF 103 is connected to the SMF 106 through an N4 interface, the UPF 103 is connected to the DN 104 through an N6 interface, and the UPF 103 is a session point for interconnecting an external protocol data unit (protocol data unit, PDU) with the data network.

The AMF 105 may be used for functions such as authentication of the UE 101, selection of the SMF 106, connection management, reachability management, and mobility management. The AMF may be further configured to transmit an SM message between the UE 101 and the SMF 106. The AMF 105 may serve as an anchor of an N1 interface for signaling connection and an N2 interface for signaling connection, and maintain and manage status information of the UE 101.

The SMF 106 may be configured to be responsible for all control plane functions of session management of a terminal device, including selection of the UPF 103, internet protocol (internet protocol, IP) address allocation, QoS attribute management of a session, and the like. The SMF 106 is connected to the UPF 103 through the interface N4, to control insertion and removal of an uplink classifier and further control insertion and removal of the UPF 103 supporting a branch point.

The AUSF 107 is configured to interact with the UDM 112 to obtain user information, and perform an authentication-related function, for example, generate an intermediate key.

The NSSF 108 is configured to select a network slice for the UE 101, and send signaling to a corresponding network slice based on single network slice selection assistance information (single network slice selection assistance information, S-NSSAI).

The NEF 109 is configured to open up various services and capabilities provided by a 3GPP network function (including content exposure or opening up to a third party), authenticate and authorize, and assist in restricting the application function.

The NRF 110 is configured to receive an NF discovery request from an NF instance, provide discovered NF instance information for the NF instance, and maintain the NF instance and an NF configuration file.

The PCF 111 is configured to formulate a policy, provide a policy control service, obtain policy-related subscription information, and the like.

The UDM 112 is used for functions such as storage of user subscription information corresponding to the UE 101, user identification processing, service/session continuity supporting, access authorization, registration and mobility management, subscription management, and user management.

The AF 113 is configured to interact with a 3GPP core network to provide a service; and may access a network exposure function and control a policy framework for interaction.

It should be noted that each entity shown in FIG. 1 may be a single device physically, or two or more entities may be integrated into a same physical device. This is not limited in this embodiment of this application.

In this embodiment of this application, the communication system 100 may be a 5G communication system, an NR system, a future evolved communication system, or the like.

In this embodiment of this application, a core network entity may also be referred to as a core network device or a network device.

Network slices (Network Slices, NSs) are different logical networks customized based on different service requirements. The network slice may be a complete end-to-end network including a terminal, an access network, a transport network, a core network, and an application server. The network slice can provide a complete telecommunication service and has a specific network capability. Alternatively, the network slice may be any combination of the terminal, the access network, the transport network, the core network, and the application server.

A network slice instance (Network Slice Instance, NSI) is instantiation for the NS. To be specific, the network slice instance is an actually running logical network, and can meet a specific network feature or service requirement. One network slice instance may provide one or more services. The network slice instance may be created by a network slice management function device. One network slice management function device may create a plurality of network slice instances and simultaneously manage the plurality of network slice instances, for example, perform performance monitoring and fault management in a running process of the network slice instances. When the plurality of network slice instances coexist, the network slice instances may share some network resources and network functions. The network slice instance may be created from a network slice template, or may not be created from a network slice template. One complete network slice instance can provide a complete end-to-end network service, and a network slice instance may include a network slice subnet instance (Network Slice Subnet Instance, NSSI) and/or a network function. One network slice instance may be divided into several network slice subnet instances, to facilitate management performed by a network management system. The network function may include a physical network function and/or a virtual network function. The physical network function and/or the virtual network function are/is collectively referred to as the network function below.

The network function (Network function, NF) is a processing function in a network, and defines a functional behavior and interface. The network function may be implemented by using special-purpose hardware, may be implemented by running software on special-purpose hardware, or may be implemented in a form of a virtual function on a general-purpose hardware platform. Therefore, from a perspective of implementation, the network function may be classified into the physical network function and the virtual network function. From a perspective of use, the network function may be classified into a dedicated network function and a shared network function.

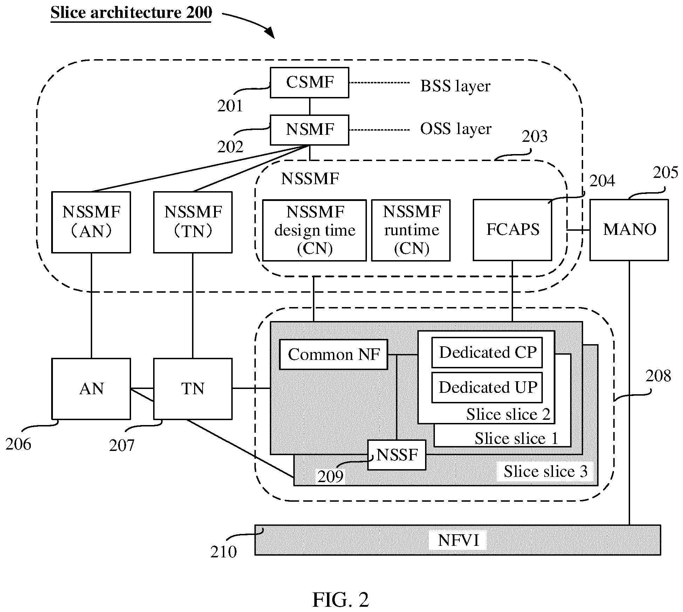

FIG. 2 shows a network slice architecture 200 according to an embodiment of this application. As shown in FIG. 2, the network slice architecture 200 may include a CSMF 201, an NSMF 202, an NSSMF 203, a network management function (Fault, Configuration, Accounting, Performance, Security, FCAPS) entity 204, a management and orchestration (Management and Orchestration, MANO) entity 205, an AN 206, a transport network (Transport Network, TN) 207, an NSI 208, and a network functions virtualization infrastructure (Network Functions Virtualization Infrastructure, NFVI) 209.

The CSMF is configured to convert a service requirement into a network requirement, and convert the service requirement into an SLA.

The NSMF is configured to decompose the network requirement and select an appropriate sub-slice based on the SLA.

The NSSMF is configured to apply for resources of the sub-slice and perform life cycle management on the sub-slice.

The MANO is configured to deploy, on the NFVI, resources such as computing resources and storage resources for each sub-slice and a network on which the sub-slice depends.

A common network function (Common NF) deployed in the NSI may be an AMF. A dedicated control panel (control panel, CP) function entity deployed in the NSI may include a network function entity that belongs exclusively to one slice, for example, an SMF, an AUSF, an NEF, an NRF, a PCF, UDM, or an AF. In some deployment scenarios, the NRF, the PCF, and the UDM may alternatively implement unified network, policy, and subscription management across a plurality of slice instances. A dedicated user panel (user panel, UP) function entity deployed in the NSI may be a UPF.

One network management system may create a plurality of network slice instances and simultaneously manage the plurality of network slice instances, for example, modify or delete the plurality of network slice instances, and perform performance monitoring and fault management on the plurality of network slice instances in a running process of the network slice instances. One complete network slice instance can provide a complete end-to-end network service, and the network slice instance may include a network slice subnet instance and/or a network function. One network slice instance is identified by using one network slice instance identifier (Network Slice Instance ID, NSI ID). For example, the NSI ID may be a character string, or may be a name that may be understood by a human being.

Each network slice instance has one or more S-NSSAI identifiers, and the S-NSSAI includes a slice type (slice/service type, SST) and a slice differentiator (slice differentiator, SD). The SST is used to define a standardized service scenario/type of a network slice, and the SD is used to distinguish different network slices of a same network slice type.

When UE registers with a telecommunication network, the network needs to select a network slice instance/network slice subnet instance for the UE based on single network slice selection assistance information (Single Network Slice Selection Assistance Information, S-NSSAI) corresponding to the UE. In addition, the network further needs to select an appropriate AMF for the UE based on the selected network slice instance/network slice subnet instance. The AMF belongs to a core network element, and is mainly responsible for signaling processing, namely, control plane functions, including functions such as access control, mobility management, and gateway selection.

A network slice planned by a telecom operator generally provides a unified SLA specification and a corresponding network slice instance for a type of users, which cannot dynamically meet a dedicated SLA specification requirement of the UE. In a current network architecture process, the UE cannot create and manage a dedicated network slice that meets the SLA specification requirement of the UE.

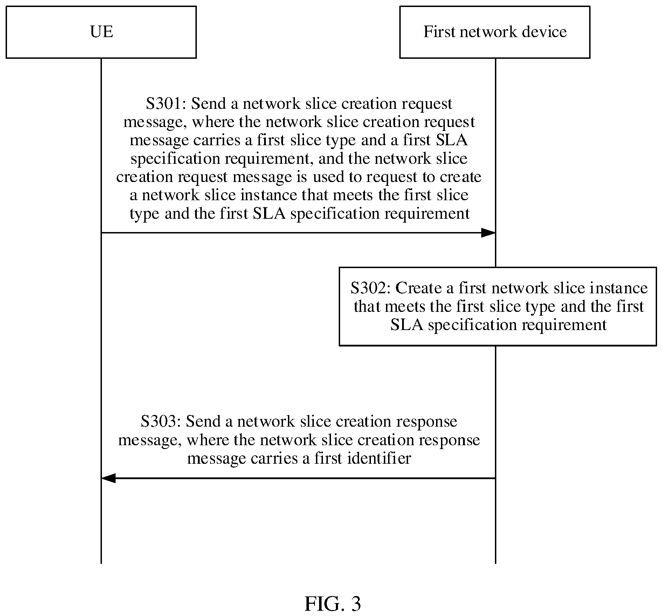

To resolve the foregoing problem, an embodiment of this application further provides a network slice management method. FIG. 3 is a schematic flowchart of a network slice management method according to an embodiment of this application. As shown in FIG. 3, the network slice management method provided in this embodiment of this application includes but is not limited to steps S301 to S303. The following further describes possible implementations of this method embodiment.

S301: UE sends a network slice creation request message to a first network device, and the first network device receives the network slice creation request message sent by the UE, where the network slice creation request message carries a first slice type and a first SLA specification requirement, and the network slice creation request message is used to request to create a network slice instance that meets the first slice type and the first SLA specification requirement.

Optionally, the first network device includes an NSMF and/or an NSSMF.

It should be noted that a user accesses a specific service by using the UE, and the UE generates the first slice type and the first SLA specification requirement based on a service requirement of the specific service. An SLA specification requirement is a network performance requirement. For example, the first SLA specification requirement is that a single-user bandwidth is greater than or equal to 5 switching bandwidths (Gbps), or an end-to-end latency is less than or equal to 100 milliseconds (ms). A slice type may include eMBB, URLL, MIoT, and the like.

Optionally, before the UE sends the network slice creation request message to the first network device, the method further includes: The UE determines the first slice type and the first SLA specification requirement. The UE queries whether a network slice that meets the first slice type and the first SLA specification requirement exists in a dedicated network slice of a current user of the UE and a public network slice. That UE sends a network slice creation request message to a first network device includes: The UE sends the network slice creation request message to the first network device if the network slice that meets the first slice type and the first SLA specification requirement does not exist in the dedicated network slice of the user and the public network slice.

Optionally, before the UE sends the network slice creation request message to the first network device, the method further includes: The UE determines the first slice type and the first SLA specification requirement. The UE queries whether a network slice that meets the first slice type and the first SLA specification requirement exists in a dedicated network slice of a current user of the UE. That UE sends a network slice creation request message to a first network device includes: The UE sends the network slice creation request message to the first network device if the network slice that meets the first slice type and the first SLA specification requirement exists in the dedicated network slice of the user.

Optionally, before the UE sends the network slice creation request message to the first network device, the method further includes: The UE determines the first slice type and the first SLA specification requirement. The UE queries whether a network slice that meets the first slice type and the first SLA specification requirement exists in a public network slice. That UE sends a network slice creation request message to a first network device includes: The UE sends the network slice creation request message to the first network device if the network slice that meets the first slice type and the first SLA specification requirement does not exist in the public network slice.

Optionally, that the UE queries whether a network slice that meets the first slice type and the first SLA specification requirement exists in a dedicated network slice of a current user of the UE and a public network slice includes: The UE first queries whether the network slice that meets the first slice type and the first SLA specification requirement exists in the dedicated network slice of the current user of the UE; and queries whether the network slice that meets the first slice type and the first SLA specification requirement exists in the public network slice if the network slice that meets the first slice type and the first SLA specification requirement does not exist in the dedicated network slice of the current user of the UE.

In this embodiment of this application, the first network device sends a first identifier of the network slice to the UE if the network slice that meets the first slice type and the first SLA specification requirement exists. The first identifier is network slice selection assistance information. The first identifier is used to determine a network slice instance corresponding to the first identifier, and may be used to assist the user in performing operations such as network slice query, network slice update, and/or network slice deletion.

Optionally, the first identifier may be S-NSSAI. For a same network slice instance, different users or different slice selection policies of a same user have a plurality of pieces of S-NSSAI used to assist slice instance selection.

It may be understood that the UE may initiate a session request based on the network slice if the network slice that meets the first slice type and the first SLA specification requirement exists in the existing dedicated network slice of the user and the public network slice. It should be noted that the dedicated network slice of the user is a network slice that is created by the user based on a service requirement of the user, and the dedicated network slice can be used only by the user. The user may query, update, and delete the dedicated network slice of the user. The public network slice is a network slice planned by a telecom operator based on a specific SLA specification requirement, and the public network slice may be used by all users who subscribe to the public network slice.

Optionally, that the UE queries whether a network slice that meets the first slice type and the first SLA specification requirement exists in a dedicated network slice of a current user of the UE and a public network slice includes: The user logs in to a preset network slice system online (or logs in to the preset network slice system by using an APP). The network slice system may be used to query information about the existing dedicated network slice of the user and the public network slice. Whether the network slice that meets the first slice type and the first SLA specification requirement exists in the dedicated network slice of the user and the public network slice is queried in a manner of manual selection or a preset slice query policy.

In some embodiments of this application, when the dedicated network slice of the user and/or the public network slice are/is updated, a seventh network device actively sends updated information about the dedicated network slice of the user and/or the public network slice to the UE. The UE receives the information about the network slice sent by the seventh network device, and locally stores the information for query by the UE.

In some embodiments of this application, after the user logs in to the preset network slice system online (or logs in to the preset network slice system by using the APP), the UE generates a first query request message by using the slice system. The UE sends the first query request message to the seventh network device, where the first query request message is used to query the information about the dedicated network slice of the user and/or the public network slice. The UE receives the information about the network slice sent by the seventh network device, and locally stores the information for query by the UE.

Optionally, the seventh network device may be a PCF.

In some embodiments of this application, after the dedicated network slice of the user is successfully created, the UE receives a network slice creation response message sent by the first network device, where the network slice creation response message carries information about the dedicated network slice. The UE locally stores the information about the dedicated network slice for query by the UE.

Optionally, information about a network slice includes a first identifier of a network slice instance, and may further include a slice type of the network slice and/or an SLA indicator of the network slice. For example, that the UE queries whether a network slice that meets the first slice type and the first SLA specification requirement exists in a dedicated network slice of a current user of the UE and a public network slice includes: The UE queries, in the dedicated network slice of the current user of the UE and the public network slice, whether a network slice whose SLA indicator meets the first SLA specification requirement exists in network slices whose slice types are the first slice type. If N network slices exist, a network slice is selected from the N network slices according to a preset policy to serve the user, where N is greater than or equal to 1. The UE determines a first identifier of the network slice, and the first identifier is used by the UE to determine a network slice instance corresponding to the first identifier.

Optionally, the SLA indicator may include one or more of indicators such as an end-to-end latency indicator, a single-user peak rate, a single-flow peak rate, a packet loss rate, a minimum guaranteed bandwidth, and a reliability indicator.

Optionally, the network slice creation request message further carries charging information, and the charging information may be used to calculate a bill of a service provided by a first network slice instance for the user.

In some embodiments of this application, the user may log in to the preset network slice system to view one or more pieces of charging information that meets the first slice type and the first SLA specification requirement. The user selects one piece of charging information from the one or more pieces of charging information, and adds the charging information to the network slice creation request message. For example, a network slice whose slice type is eMBB and whose end-to-end latency is 100 milliseconds corresponds to one piece of charging information, and the charging information is 100 yuan per hour. The charging information is used to calculate a bill of a service provided by a first network slice instance for the user. It may be understood that after the network slice instance is successfully created, the network slice instance may provide the service for the user at pay, and the bill of the service may be calculated based on the foregoing charging information.

Optionally, the network slice creation request message further carries an identifier of a network slice template, and the network slice creation request message is used to request to create the network slice instance based on the network slice template corresponding to the identifier of the network slice template.

The network slice template is a manner of generating the network slice instance, and is used to provide a reference for generating the network slice instance. The network slice template specifies how the network slice instance should be generated. For example, the network slice template may indicate a configuration parameter of the network slice, a network function included in the network slice, and/or an SLA indicator that should be met.

It should be noted that the telecom operator may preset a plurality of network slice templates based on the slice type, the SLA indicator, and the charging information, and store the plurality of network slice templates in a network slice template database. Both the UE and the first network device can query the network slice template database.

In some embodiments of this application, the user may log in to the preset network slice system to query one or more network slice templates that are in a network slice template database and that meet the first slice type and the first SLA specification requirement. The user selects a network slice template from the one or more network slice templates, and adds an identifier of the network slice template to the network slice creation request message.

In some embodiments of this application, the user may log in to the preset network slice system to query one or more network slice templates that are in a network slice template database and that meet the first slice type and the first SLA specification requirement, where the one or more network slice templates correspond to one or more pieces of charging information. The user selects one piece of charging information from the charging information, and adds the charging information to the network slice creation request message. It may be understood that if N network slice templates correspond to X pieces of charging information, one piece of charging information in the X pieces of charging information corresponds to n network slice templates, where both n and X are positive integers greater than 0 and less than or equal to N.

S302: The first network device creates the first network slice instance that meets the first slice type and the first SLA specification requirement.

Specifically, the first network device determines a configuration parameter of the first network slice instance based on the first slice type and the first SLA specification requirement, and configures a network function of the first network slice instance based on the configuration parameter, to create the first network slice instance.

Optionally, the first network device creates the first network slice instance, and generates an identifier of the first network slice instance. An identifier of a network slice instance is used by a network device to determine the network slice instance corresponding to the identifier, and each network slice instance has a unique identifier of the network slice instance.

Optionally, the identifier of the network slice instance may be an NSI ID.

Optionally, the network slice creation request message further carries the charging information, and the first network device queries whether a network slice template that meets the first SLA specification requirement, the first slice type, and the charging information exists in the network slice template database. If one or more network slice templates exist, the first network device selects a first network slice template from the one or more network slice templates according to a preset slice template selection policy. The first network device configures resources for the first network slice instance based on the first network slice template, to instantiate the first network slice instance. If the network slice template that meets the first SLA specification requirement, the first slice type, and the charging information does not exist in the network slice template database, the first network device configures the network function of the first network slice instance based on the configuration parameter, to create the first network slice instance.

Optionally, the network function may include at least one of a physical network function and a virtual network function.

Optionally, the network slice creation request message further carries the identifier of the network slice template, and the first network device configures the resources for the first network slice instance based on the first network slice template, to instantiate the first network slice instance.

Optionally, the network slice creation request message does not carry the charging information. After creating the first network slice instance, the first network device queries charging information corresponding to the first slice type and the first SLA specification requirement. The charging information may be used to calculate the bill of the service provided by the first network slice instance for the user.

Optionally, after the first network device creates the first network slice instance that meets the first slice type and the first SLA specification requirement, the first network device sends a first notification message to a fifth network device, where the first notification message is used to notify the fifth network device that the first network slice instance can provide the service.

It should be noted that in this embodiment of this application, the first notification message may include the first identifier and the identifier of the first network slice instance. After receiving the first notification message, the fifth network device records a mapping relationship between the first identifier and the identifier of the first network slice instance. The first notification message is used to notify the fifth network device that the first identifier may be used for network slice selection, and that the network slice instance corresponding to the identifier of the first network slice instance can provide the service.

It may be understood that if the fifth network device receives a query request message of the network slice instance, and the query request message carries the first identifier, the fifth network device queries the identifier of the network slice instance to which the first identifier is mapped, to further determine the network slice instance corresponding to the identifier of the network slice instance.

Optionally, the fifth network device may be an NSSF.

Optionally, after the first network device receives the network slice creation request message sent by the UE, the first network device generates the first identifier.

S303: The first network device sends the network slice creation response message to the UE, and the UE receives the network slice creation response message sent by the first network device, where the network slice creation response message carries the first identifier.

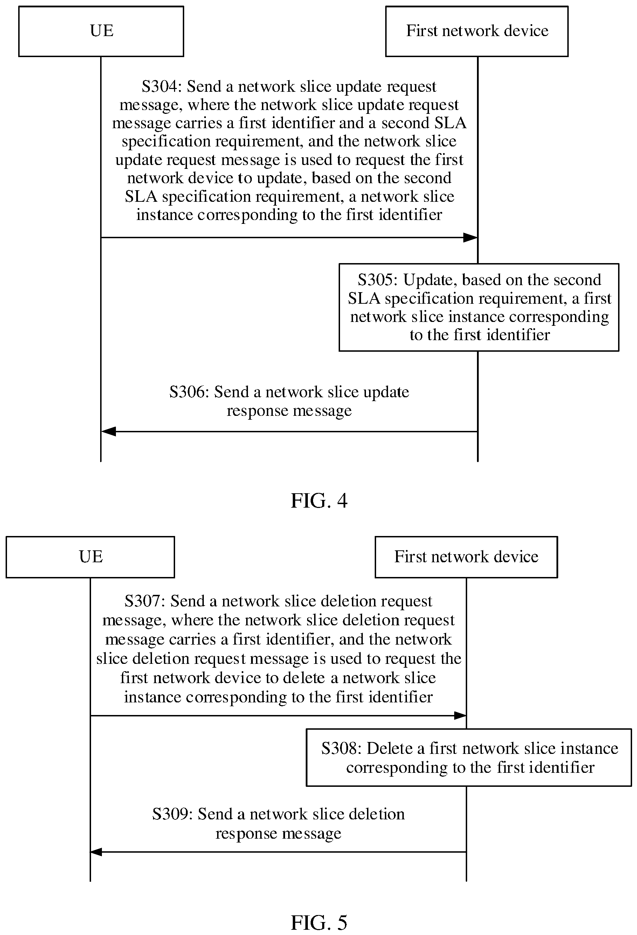

In some embodiments of this application, as shown in FIG. 4, after the UE receives the network slice creation response message sent by the second network device, the network slice management method provided in this application may further include but is not limited to steps S304 to S306. The following further describes possible implementations of this method embodiment.

S304: The UE sends a network slice update request message to the first network device, and the first network device receives the network slice update request message sent by the UE, where the network slice update request message carries the first identifier and a second SLA specification requirement, and the network slice update request message is used to request the first network device to update, based on the second SLA specification requirement, the network slice instance corresponding to the first identifier.

S305: The first network device updates, based on the second SLA specification requirement, the first network slice instance corresponding to the first identifier.

S306: The first network device sends a network slice update response message to the UE, and the UE receives the network slice update response message sent by the first network device.

In this embodiment of this application, the network slice update response message is used to notify the UE of a network slice update result, in other words, whether network slice update is completed.

Optionally, after the first network device receives the network slice update request message sent by the UE, the method further includes: The first network device determines whether the network slice instance corresponding to the first identifier is the dedicated network slice of the user of the user equipment. That the first network device updates, based on the second SLA specification requirement, the first network slice instance corresponding to the first identifier includes: The first network device updates, based on the second SLA specification requirement, the first network slice instance corresponding to the first identifier if the network slice instance corresponding to the first identifier is the dedicated network slice of the user.

In some embodiments of this application, as shown in FIG. 5, after the UE receives the network slice creation response message sent by the second network device, the network slice management method provided in this application may further include but is not limited to steps S307 to S309. The following further describes possible implementations of this method embodiment.

S307: The UE sends a network slice deletion request message to the first network device, and the first network device receives the network slice deletion request message sent by the UE, where the network slice deletion request message carries the first identifier, and the network slice deletion request message is used to request the first network device to delete the network slice instance corresponding to the first identifier.

S308: The first network device deletes the first network slice instance corresponding to the first identifier.

S309: The first network device sends a network slice deletion response message to the UE, and the UE receives the network slice deletion response message sent by the first network device.

In this embodiment of this application, the network slice deletion response message is used to notify the UE of a network slice deletion result, in other words, whether network slice deletion is completed.

Optionally, after the first network device receives the network slice deletion request message sent by the UE, the method further includes: The first network device determines whether the network slice instance corresponding to the first identifier is the dedicated network slice of the user of the user equipment. That the first network device deletes the first network slice instance corresponding to the first identifier includes: The first network device deletes the first network slice instance corresponding to the first identifier if the network slice instance corresponding to the first identifier is the dedicated network slice of the user.

Optionally, after the first network device deletes the first network slice instance corresponding to the first identifier, the first network device sends a second notification message to a fifth network device, where the second notification message is used to notify the fifth network device that the first network slice instance has been deleted, and the first network slice instance cannot provide the service.

It should be noted that in this embodiment of this application, the second notification message may include the identifier of the first network slice instance and the first identifier. The second notification message is used to notify the fifth network device that the first network slice instance has been deleted, and the first identifier mapped to the identifier of the first network slice instance cannot be used for network slice selection.

In this application, the UE sends the network slice creation request message to the first network device, and the first network device receives the network slice creation request message sent by the UE, where the network slice creation request message carries the first slice type and the first SLA specification requirement, and the network slice creation request message is used to request to create the network slice instance that meets the first slice type and the first SLA specification requirement. The first network device creates the first network slice instance that meets the first slice type and the first SLA specification requirement. The first network device sends the network slice creation response message to the UE, and the UE receives the network slice creation response message sent by the first network device, where the network slice creation response message carries the first identifier. According to this embodiment of this application, the user can customize a dedicated network slice. In addition, after the user creates the dedicated network slice by using the UE, the user may perform, based on the network slice by using the UE, operations such as session establishment, network slice update, and network slice deletion. Therefore, according to this embodiment of this application, the user can manage the dedicated network slice.

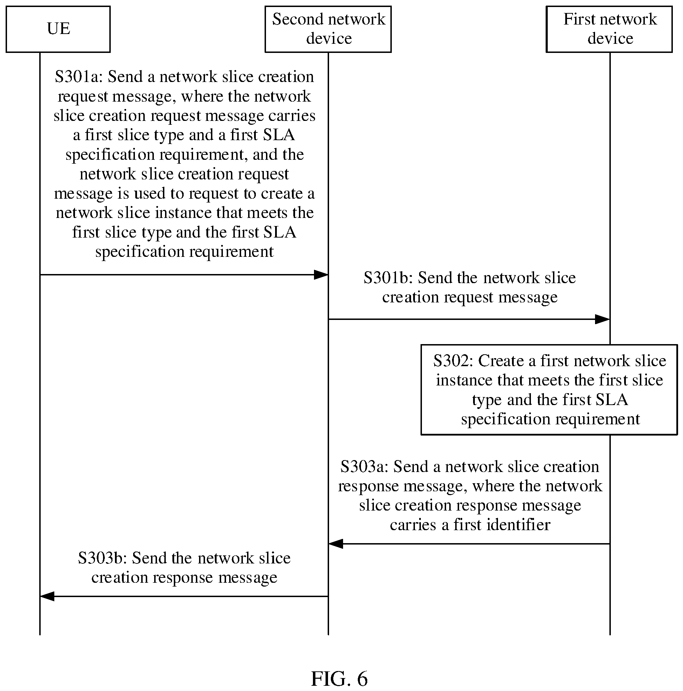

In some embodiments of this application, as shown in FIG. 6, step S301 may further include S301a and S301b, and step S303 may further include S303a and S303b.

S301a: UE sends a network slice creation request message to a second network device, and the second network device receives the network slice creation request message sent by the UE, where the network slice creation request message carries a first slice type and a first SLA specification requirement, and the network slice creation request message is used to request to create a network slice instance that meets the first slice type and the first SLA specification requirement.

The second network device externally provides UE-based slice management capability exposure, allows the UE to access the second network device, and provides a function of subscribing to and managing network slice deployment of a specific SLA requirement for the UE. The second network device may be an NEF, a CSMF, an SPG, an AMF, an NSMF, an NSSMF, or the like. When the second network device is the NSMF or the NSSMF, the NSMF or the NSSMF has a slice management capability exposure function. It may be understood that the second network device and a first network device may be a same device. This is not limited in this application.

Service provisioning means provisioning registration data and service data of a user by an operator by using a service provisioning system and by a terminal user by using a terminal, to subscribe to, modify, and cancel services. As a unified service provisioning gateway, the SPG provides a service provisioning interface for a service provisioning system of a telecom operator. All commands are forwarded to a target network element through the SPG.

In some embodiments of this application, the second network device is the AMF, and the UE sends the network slice creation request message to the second network device by using NAS signaling.

S301b: The second network device sends the network slice creation request message to the first network device, and the first network device receives the network slice creation request message sent by the second network device.

Optionally, the network slice creation request message further carries an authentication code. After the second network device receives the network slice creation request message sent by the UE, the network slice management method further includes: The second network device authenticates, based on the authentication code, whether a user has authorization for network slice creation. That the second network device sends the network slice creation request message to the first network device includes: The second network device sends the network slice creation request message to the first network device if authentication that the user has authorization for network slice creation and that is performed by the second network device succeeds. In this embodiment of this application, the second network device sends a first response message to the UE if authentication fails, where the first response message is used to notify the UE that authentication fails and network slice creation fails.

In some embodiments of this application, the authentication code is a user identifier. That the second network device authenticates, based on the authentication code, whether a user has authorization for network slice creation includes: The second network device queries subscription information of the user based on the user identifier. Authentication that the user has authorization for network slice creation and that is performed by the second network device succeeds if the subscription information of the user includes a network slice creation capability, or authentication fails if the subscription information of the user does not include a network slice creation capability.

In this embodiment of this application, the second network device may send a second query request message to UDM based on the user identifier, where the second query request message is used to query the subscription information of the user corresponding to the user identifier. The second network device receives a second query response message sent by the UDM, where the second query response message is used to notify the second network device whether the user has the network slice creation capability.

In some embodiments of this application, the authentication code is a user identifier and a first authorization code of the user. That the second network device authenticates, based on the authentication code, whether a user has authorization for network slice creation includes: The second network device locally queries a second authorization code corresponding to the user identifier. Authentication that the user has authorization for network slice creation and that is performed by the second network device succeeds if the second authorization code is consistent with the first authorization code, or authentication fails if the second authorization code is not consistent with the first authorization code.

It should be noted that after the user subscribes to the network slice creation capability from the telecom operator, the telecom operator configures a unique authorization code for the user, where authorization code may indicate that the user has the network slice creation capability. The second network device stores the user identifier of the user and the authorization code of the user. Therefore, in this embodiment of this application, the second network device does not need to query the subscription information of the user, but needs to perform authentication only based on the user identifier and authorization code.

In some embodiments of this application, the authentication code is a first account and a first password of the user. That the second network device authenticates, based on the authentication code, whether a user has authorization for network slice creation includes: The second network device locally queries a second account and a second password of the user. Authentication that the user has authorization for network slice creation and that is performed by the second network device succeeds if the second account is consistent with the first account and the second password is consistent with the first password, or authentication fails if the second account is not consistent with the first account or the second password is not consistent with the first password.

It should be noted that the first account and the first password of the user may be set by the user, may be randomly generated by the UE for the user, or may be pre-allocated by the telecom operator to the user. Generation manners are not limited to the foregoing generation manners. The first account and the first password of the user may alternatively be generated in another manner. This is not specifically limited herein.

In some embodiments of this application, the authentication code is a user identifier and a first authorization code of the user. That the second network device authenticates, based on the authentication code, whether a user has authorization for network slice creation includes: The second network device sends a first authentication request message to an AUSF, where the first authentication request message includes the user identifier and the first authorization code of the user, and the first authentication request message is used to request the AUSF to authenticate whether the user has authorization for network slice creation. The AUSF verifies whether an authorization code corresponding to the user identifier is consistent with the first authorization code. Authentication succeeds if the authorization code corresponding to the user identifier is consistent with the first authorization code, or authentication fails if the authorization code corresponding to the user identifier is not consistent with the first authorization code. The AUSF sends a first authentication response message to the second network device, where the first authentication response message is used to notify the second network device whether authentication succeeds.

In some embodiments of this application, the authentication code is a first account and a first password of the user. That the second network device authenticates, based on the authentication code, whether a user has authorization for network slice creation includes: The second network device sends a second authentication request message to an AUSF, where the second authentication request message includes the first account and the first password, and the second authentication request message is used to request the AUSF to authenticate whether the user has authorization for network slice creation. The AUSF verifies whether the first account exists. If the first account exists, the AUSF verifies whether a password corresponding to the first account is consistent with the first password. Authentication succeeds if the password corresponding to the first account is consistent with the first password, or authentication fails if the password corresponding to the first account is not consistent with the first password. The AUSF sends a second authentication response message to the second network device, where the second authentication response message is used to notify the second network device whether authentication succeeds.

In this embodiment of this application, the AUSF is configured to authenticate, based on the authentication code, whether the user has authorization for network slice creation. The AUSF may be an AUSF. The second network device locally invokes a service-oriented interface of the AUSF, to implement authentication on whether the user has authorization for network slice creation.

Optionally, after the second network device receives the network slice creation request message sent by the UE, the second network device generates a first identifier, and the second network device sends the network slice creation request message and the first identifier to the first network device.

S303a: The first network device sends a network slice creation response message to the second network device, and the second network device receives the network slice creation response message sent by the first network device, where the network slice creation response message carries the first identifier.

It may be understood that the network slice creation response message is used to indicate whether the network slice is successfully created. If the network slice creation response message indicates that the network slice is successfully created, the network slice creation response message carries the first identifier.

S303b: The second network device sends the network slice creation response message to the UE, and the UE receives the network slice creation response message sent by the second network device.

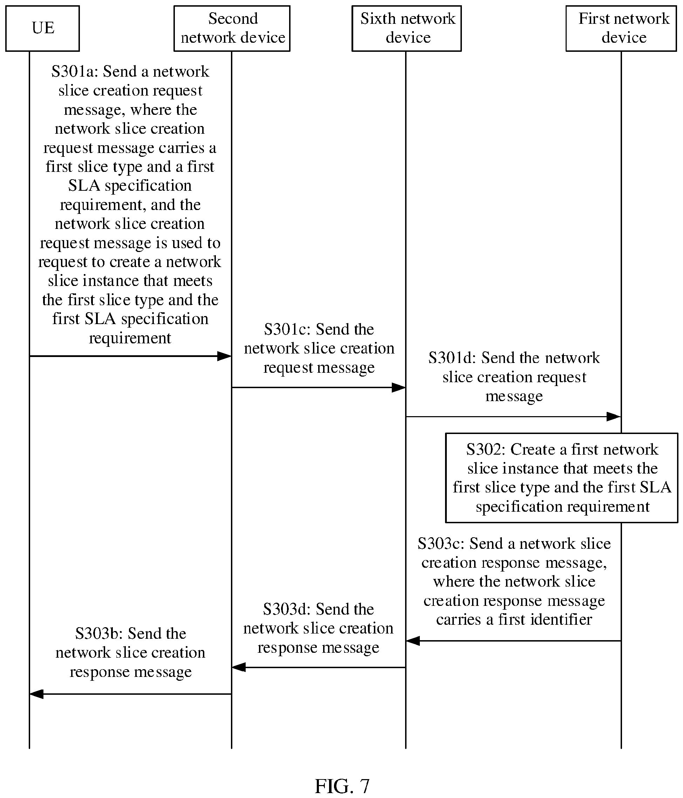

In some embodiments of this application, as shown in FIG. 7, step S301b may further include S301c and S301d, and step S303a may further include S303c and S303d.

S301c: The second network device sends the network slice creation request message to a sixth network device, and the sixth network device receives the network slice creation request message sent by the second network device.

S301d: The sixth network device sends the network slice creation request message to the first network device, and the first network device receives the network slice creation request message sent by the sixth network device.

S303c: The first network device sends the network slice creation response message to the sixth network device, and the sixth network device receives the network slice creation response message sent by the first network device, where the network slice creation response message carries the first identifier.

S303d: The sixth network device sends the network slice creation response message to the second network device, and the second network device receives the network slice creation response message sent by the sixth network device.

In this embodiment of this application, the second network device may be an NEF, an SPG, an AMF, or the like. The sixth network device may be a CSMF.

Optionally, the network slice creation request message carries the authentication code. After the sixth network device receives the network slice creation request message sent by the second network device, the method further includes: The sixth network device authenticates, based on the authentication code, whether the user has authorization for network slice creation. That the sixth network device sends the network slice creation request message to the first network device includes: The sixth network device sends the network slice creation request message to the first network device if authentication succeeds. In this embodiment of this application, the sixth network device sends a second response message to the second network device if authentication fails, and the second network device receives the second response message, where the second response message is used to notify the UE that authentication fails and network slice creation fails. The second network device sends the second response message to the UE.

For a specific implementation in which the sixth network device authenticates, based on the authentication code, whether the user has authorization for network slice creation, refer to an implementation in which the second network device authenticates, based on the authentication code, whether the user has authorization for network slice creation. Details are not described herein again.

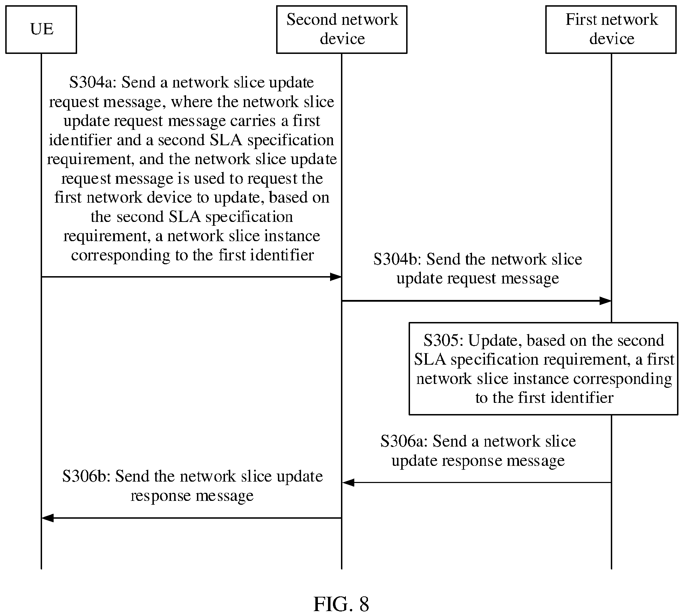

In some embodiments of this application, as shown in FIG. 8, step S304 may further include S304a and S304b, and step S306 may further include S306a and S306b.

S304a: The UE sends the network slice update request message to a second network device, and the second network device receives the network slice update request message sent by the UE, where the network slice update request message carries the first identifier and the second SLA specification requirement, and the network slice update request message is used to request the first network device to update, based on the second SLA specification requirement, the network slice instance corresponding to the first identifier.

S304b: The second network device sends the network slice update request message to the first network device, and the first network device receives the network slice update request message sent by the second network device.

S306a: The first network device sends the network slice update response message to the second network device, and the second network device receives the network slice update response message sent by the first network device.

S306b: The second network device sends the network slice update response message to the UE, and the UE receives the network slice update response message sent by the second network device.

Optionally, after the second network device receives the network slice update request message sent by the UE, the method further includes: The second network device determines whether the network slice instance corresponding to the first identifier is the dedicated network slice of the user of the user equipment. That the second network device sends the network slice update request message to the first network device includes: The second network device sends the network slice update request message to the first network device if the network slice instance corresponding to the first identifier is the dedicated network slice of the user.

Optionally, the network slice update request message carries an authentication code. After the second network device receives the network slice update request message sent by the UE, the method further includes: The second network device authenticates, based on the authentication code, whether the user has authorization for network slice update. That the second network device sends the network slice update request message to the first network device includes: The second network device sends the network slice update request message to the first network device if authentication succeeds. In this embodiment of this application, the second network device sends a third response message to the UE if authentication fails, where the third response message is used to notify the UE that authentication fails and network slice update fails.

In some embodiments of this application, the authentication code is a user identifier. That the second network device authenticates, based on the authentication code, whether the user has authorization for network slice update includes: The second network device queries subscription information of the user based on the user identifier. Authentication that the user has authorization for network slice update and that is performed by the second network device succeeds if the subscription information of the user includes a network slice update capability, or authentication fails if the subscription information of the user does not include a network slice update capability.

Authentication modes are not limited to the foregoing authentication mode. There may be another implementation in which the second network device authenticates, based on the authentication code, whether the user has authorization for network slice update. Refer to the foregoing implementation in which the second network device authenticates, based on the authentication code, whether the user has authorization for network slice update. Details are not described herein again.

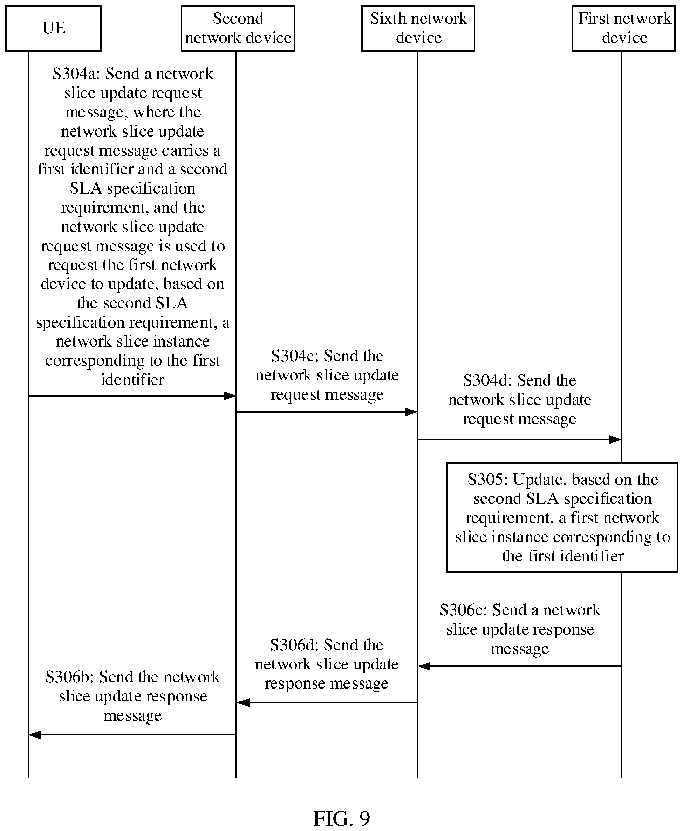

In some embodiments of this application, as shown in FIG. 9, step S304b may further include S304c and S304d, and step S306a may further include S306c and S306d.

S304c: The second network device sends the network slice update request message to a sixth network device, and the sixth network device receives the network slice update request message sent by the second network device.

S304d: The sixth network device sends the network slice update request message to the first network device, and the first network device receives the network slice update request message sent by the sixth network device.

S306c: The first network device sends the network slice update response message to the sixth network device, and the sixth network device receives the network slice update response message sent by the first network device.

S306d: The sixth network device sends the network slice update response message to the second network device, and the second network device receives the network slice update response message sent by the sixth network device.

In this embodiment of this application, the second network device may be an NEF, an SPG, an AMF, or the like. The sixth network device may be a CSMF.

Optionally, the network slice update request message carries the authentication code. After the sixth network device receives the network slice update request message sent by the second network device, the method further includes: The sixth network device authenticates, based on the authentication code, whether the user has authorization for network slice update. That the sixth network device sends the network slice update request message to the first network device includes: The sixth network device sends the network slice update request message to the first network device if authentication succeeds. In this embodiment of this application, the sixth network device sends a fourth response message to the second network device if authentication fails, and the second network device receives the fourth response message, where the fourth response message is used to notify the UE that authentication fails and network slice update fails. The second network device sends the fourth response message to the UE, and the UE receives the fourth response message sent by the second network device.

For a specific implementation in which the sixth network device authenticates, based on the authentication code, whether the user has authorization for network slice update, refer to the implementation in which the second network device authenticates, based on the authentication code, whether the user has authorization for network slice update. Details are not described herein again.

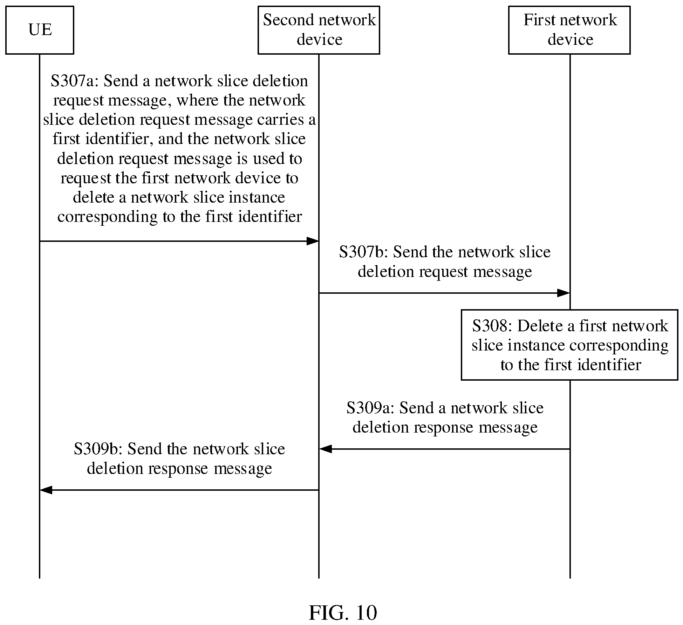

In some embodiments of this application, as shown in FIG. 10, step S307 may further include S307a and S307b, and step S309 may further include S309a and S309b.

S307a: The UE sends the network slice deletion request message to a second network device, and the second network device receives the network slice deletion request message sent by the UE, where the network slice deletion request message carries the first identifier, and the network slice deletion request message is used to request the first network device to delete the network slice instance corresponding to the first identifier.

S307b: The second network device sends the network slice deletion request message to the first network device, and the first network device receives the network slice deletion request message sent by the second network device.

S309a: The first network device sends the network slice deletion response message to the second network device, and the second network device receives the network slice deletion response message sent by the first network device.

S309b: The second network device sends the network slice deletion response message to the UE, and the UE receives the network slice deletion response message sent by the second network device.

Optionally, after the second network device receives the network slice deletion request message sent by the UE, the method further includes: The second network device determines whether the network slice instance corresponding to the first identifier is the dedicated network slice of the user of the user equipment. That the second network device sends the network slice deletion request message to the first network device includes: The second network device sends the network slice deletion request message to the first network device if the network slice instance corresponding to the first identifier is the dedicated network slice of the user.

Optionally, the network slice deletion request message carries an authentication code. After the second network device receives the network slice deletion request message sent by the UE, the method further includes: The second network device authenticates, based on the authentication code, whether the user has authorization for network slice deletion. That the second network device sends the network slice deletion request message to the first network device includes: The second network device sends the network slice deletion request message to the first network device if authentication succeeds. In this embodiment of this application, the second network device sends a fifth response message to the UE if authentication fails, where the fifth response message is used to notify the UE that authentication fails and network slice deletion fails.

In some embodiments of this application, the authentication code is a user identifier. That the second network device authenticates, based on the authentication code, whether the user has authorization for network slice deletion includes: The second network device queries subscription information of the user based on the user identifier. Authentication that the user has authorization for network slice deletion and that is performed by the second network device succeeds if the subscription information of the user includes a network slice deletion capability, or authentication fails if the subscription information of the user does not include a network slice deletion capability.

Authentication modes are not limited to the foregoing authentication mode. There may be another implementation in which the second network device authenticates, based on the authentication code, whether the user has authorization for network slice deletion. Refer to the foregoing implementation in which the second network device authenticates, based on the authentication code, whether the user has authorization for network slice deletion. Details are not described herein again.

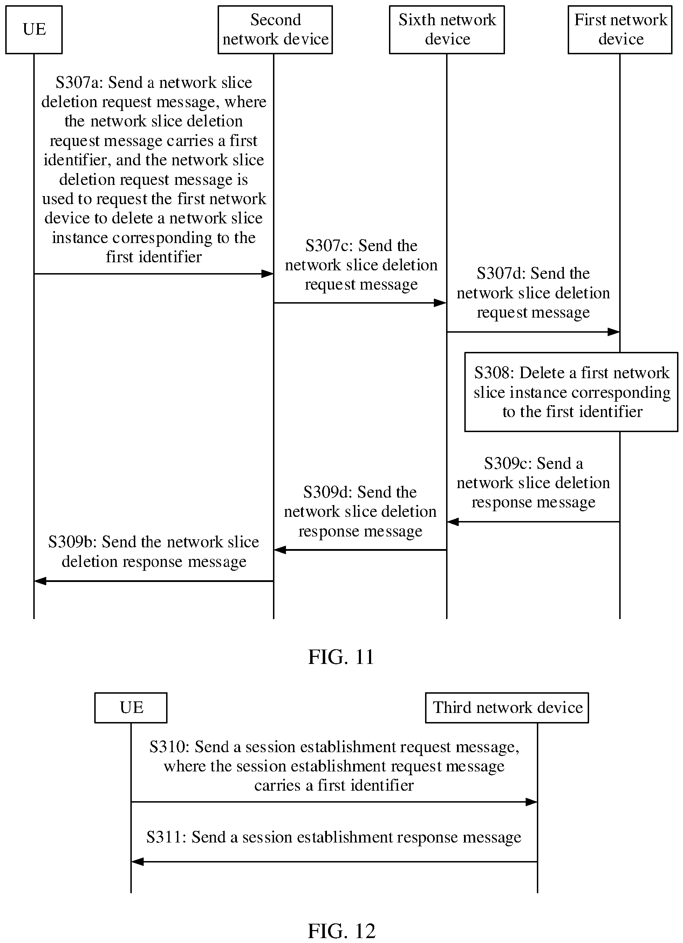

In some embodiments of this application, as shown in FIG. 11, step S307b may further include S307c and S307d, and step S309a may further include S309c and S309d.

S307c: The second network device sends the network slice deletion request message to a sixth network device, and the sixth network device receives the network slice deletion request message sent by the second network device.

S307d: The sixth network device sends the network slice deletion request message to the first network device, and the first network device receives the network slice deletion request message sent by the sixth network device.

S309c: The first network device sends the network slice deletion response message to the sixth network device, and the sixth network device receives the network slice deletion response message sent by the first network device.

S309d: The sixth network device sends the network slice deletion response message to the second network device, and the second network device receives the network slice deletion response message sent by the sixth network device.

In this embodiment of this application, the second network device may be an NEF, an SPG, an AMF, or the like. The sixth network device may be a CSMF.

Optionally, the network slice deletion request message carries an authentication code. After the sixth network device receives the network slice deletion request message sent by the second network device, the method further includes: The sixth network device authenticates, based on the authentication code, whether the user has authorization for network slice deletion. That the sixth network device sends the network slice deletion request message to the first network device includes: The sixth network device sends the network slice deletion request message to the first network device if authentication succeeds. In this embodiment of this application, the sixth network device sends a sixth response message to the second network device if authentication fails, and the second network device receives the second response message, where the sixth response message is used to notify the UE that authentication fails and network slice deletion fails. The second network device sends the sixth response message to the UE, and the UE receives the sixth response message sent by the second network device.

For a specific implementation in which the sixth network device authenticates, based on the authentication code, whether the user has authorization for network slice deletion, refer to the implementation in which the second network device authenticates, based on the authentication code, whether the user has authorization for network slice deletion. Details are not described herein again.

In a common session establishment procedure, after the UE initiates a session request based on a network slice to an AMF, the AMF selects the network slice for a session according to a slice selection policy delivered by a PCF, and the AMF queries an SMF corresponding to the network slice and forwards the session request of the UE to the SMF.

In some embodiments of this application, as shown in FIG. 12, after the UE receives the network slice creation response message sent by the second network device, the network slice management method provided in this application may further include but is not limited to steps S310 and S311. The following further describes possible implementations of this method embodiment.

S310: The UE sends a session establishment request message to a third network device, and the third network device receives the session establishment request message sent by the UE, where the session establishment request message carries the first identifier.

S311: The third network device sends a session establishment response message to the UE, and the UE receives the session establishment response message sent by the third network device.

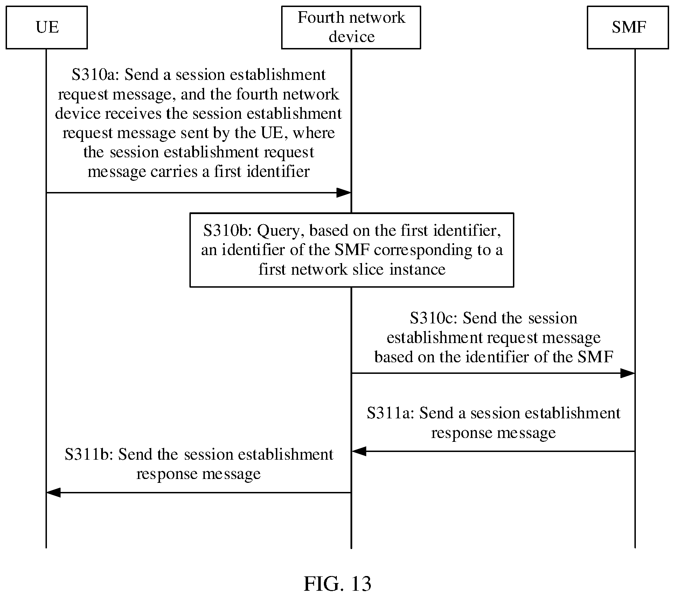

In some embodiments of this application, if the third network device is an SMF, as shown in FIG. 13, step S310 may further include S310a, S310b, and S310c, and step S311 may further include S311a and S311b.

S310a: The UE sends the session establishment request message to a fourth network device, and the fourth network device receives the session establishment request message sent by the UE, where the session establishment request message carries the first identifier.

S310b: The fourth network device queries, based on the first identifier, an identifier of an SMF corresponding to the first network slice instance.

S310c: The fourth network device sends the session establishment request message to the SMF based on the identifier of the SMF, and the SMF receives the session establishment request message sent by the fourth network device.

S311a: The SMF sends the session establishment response message to the fourth network device, and the fourth network device receives the session establishment response message sent by the SMF.

S311b: The fourth network device sends the session establishment response message to the UE, and the UE receives the session establishment response message sent by the fourth network device.

Optionally, the fourth network device may be an AMF.

Optionally, that the fourth network device queries, based on the first identifier, an SMF corresponding to the first network slice instance includes: The fourth network device sends a third query request message to a fifth network device, where the third query request message is used to query the SMF corresponding to the first network slice instance. The fourth network device receives a third query response message sent by the fifth network device, where the third query response message carries the identifier of the SMF corresponding to the first network slice instance.

Optionally, the fifth network device may be an NSSF.

In this embodiment of this application, the session establishment request message sent by the UE carries the first identifier, and the session establishment request message is used to establish a session based on the network slice instance corresponding to the first identifier. After receiving the session establishment request message sent by the UE, the fourth network device directly queries the first network slice instance corresponding to the first identifier to learn of the SMF corresponding to the first network slice instance, and forwards the session establishment request message to the SMF. Therefore, in this embodiment of this application, the PCF does not need to deliver the slice selection policy.

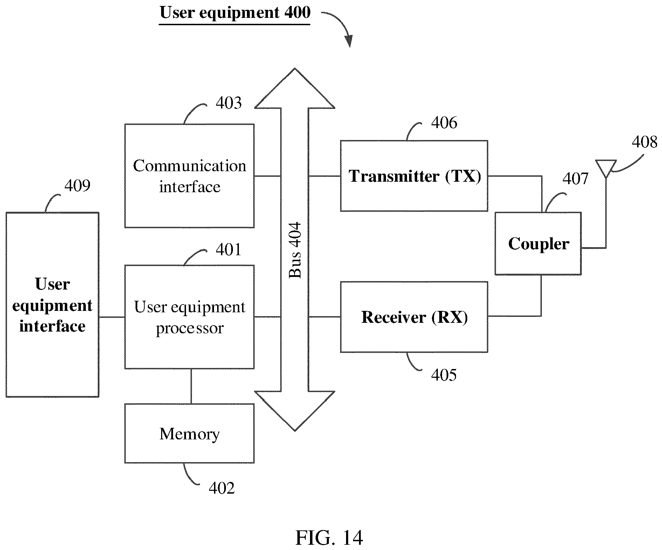

FIG. 14 shows user equipment 400 according to an embodiment of this application. As shown in FIG. 14, the user equipment 400 may include one or more user equipment processors 401, a memory 402, a communication interface 403, a receiver 405, a transmitter 406, a coupler 407, an antenna 408, and a user equipment interface 409. These components may be connected through a bus 404 or in another manner. In FIG. 14, an example in which the components are connected through the bus is used.

The communication interface 403 may be used by the user equipment 400 to communicate with another communication device, for example, a network device. Specifically, the network device may be the network device 400 shown in FIG. 14. Specifically, the communication interface 403 may be a communication interface in 5G or future new radio. Not limited to a wireless communication interface, a wired communication interface 403, for example, a local access network (local access network, LAN) interface, may further be configured on the user equipment 400. The transmitter 406 may be configured to perform transmission processing on a signal output by the user equipment processor 401. The receiver 405 may be configured to perform receiving processing on a mobile communication signal received by the antenna 408.

In some embodiments of this application, the transmitter 406 and the receiver 405 may be considered as a wireless modem. In the user equipment 400, there may be one or more transmitters 406 and one or more receivers 405. The antenna 408 may be configured to convert electromagnetic energy in a transmission line into an electromagnetic wave in free space, or convert an electromagnetic wave in free space into electromagnetic energy in a transmission line. The coupler 407 is configured to divide the mobile communication signal received by the antenna 408 into a plurality of channels of signals, and allocate the plurality of channels of signals to a plurality of receivers 405.

In addition to the transmitter 406 and the receiver 405 shown in FIG. 14, the user equipment 400 may further include other communication components, for example, a GPS module, a Bluetooth (Bluetooth) module, and a wireless fidelity (wireless fidelity, Wi-Fi) module. Not limited to wireless communication, a wired network interface (for example, the LAN interface) may be further configured on the user equipment 400 to support wired communication.

The user equipment 400 may further include an input/output module. The input/output module may be configured to implement interaction between the user equipment 400 and user equipment/an external environment, and may mainly include an audio input/output module, a key input module, a display, and the like. Specifically, the input/output module may further include a camera, a touchscreen, a sensor, and the like. The input/output module communicates with the user equipment processor 401 through the user equipment interface 409.

The memory 402 is coupled to the user equipment processor 401, and is configured to store various software programs and/or a plurality of groups of instructions. Specifically, the memory 402 may include a high-speed random access memory, and may also include a non-volatile memory, for example, one or more magnetic disk storage devices, flash memory devices, or other non-volatile solid-state storage devices. The memory 402 may store an operating system (briefly referred to as a system below), for example, an embedded operating system such as Android, iOS, Windows, or Linux. The memory 402 may further store a network communication program. The network communication program may be used to communicate with one or more additional devices, one or more user equipments, or one or more network devices.

In some embodiments of this application, the memory 402 may be configured to store a program for implementing, on a side of the user equipment 400, the network slice management method provided in one or more embodiments of this application. For implementation of the network slice management method provided in the one or more embodiments of this application, refer to the foregoing embodiments.

The user equipment processor 401 may be configured to read and execute computer-readable instructions. Specifically, the user equipment processor 401 may be configured to invoke a program stored in the memory 402, for example, the program for implementing, on the side of the user equipment 400, the network slice management method provided in the one or more embodiments of this application, and execute instructions included in the program.

It may be understood that the user equipment 400 may be the user equipment 101 in the communication system 100 shown in FIG. 1, and may be implemented as a handheld device, a vehicle-mounted device, a wearable device, a computing device, user equipment in various forms, a mobile station (English: Mobile Station, MS for short), a terminal (terminal), or the like.

It should be noted that the user equipment 400 shown in FIG. 14 is merely an implementation of this embodiment of this application. In actual application, the user equipment 400 may further include more or fewer components, and this is not limited herein.

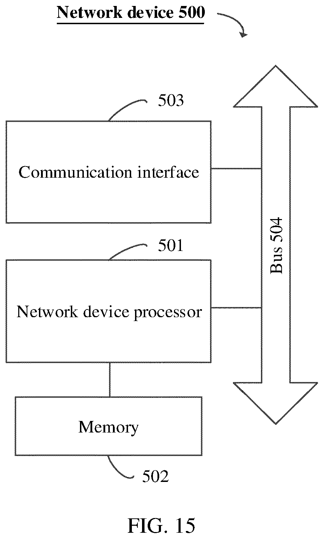

FIG. 15 shows a network device 500 according to an embodiment of this application. As shown in FIG. 15, the network device 500 may include one or more network device processors 501, a memory 502, and a communication interface 503. These components may be connected through a bus 504 or in another manner. In FIG. 15, an example in which the components are connected through the bus is used.

The communication interface 503 may be used by the network device 500 to communicate with another communication device, for example, user equipment or another network device. Specifically, the communication interface 503 may be a communication interface in 5G or future new radio. Not limited a wireless communication interface, a wired communication interface 503 may be further configured on the network device 500 to support wired communication. For example, a backhaul link between a network device 500 and another network device 500 may be a wired communication connection.

The memory 502 is coupled to the network device processor 501, and is configured to store various software programs and/or a plurality of groups of instructions. Specifically, the memory 502 may include a high-speed random access memory, and may include a non-volatile memory, for example, one or more magnetic disk storage devices, flash memory devices, or other non-volatile solid-state storage devices. The memory 502 may store an operating system (briefly referred to as a system below), for example, an embedded operating system such as uCOS, VxWorks, or RTLinux. The memory 502 may further store a network communication program. The network communication program may be used to communicate with one or more additional devices, one or more user equipments, or one or more network devices.

In this embodiment of this application, the network device processor 501 may be configured to read and execute computer-readable instructions. Specifically, the network device processor 501 may be configured to: invoke a program stored in the memory 502, for example, a program for implementing, on a side of the network device 500, the network slice management method provided in one or more embodiments of this application; and execute instructions included in the program.

It may be understood that the network device 500 may be a core network entity in the communication system 100 shown in FIG. 1, for example, the UPF 104, the AMF 105, the SMF 106, the AUSF 107, the NSSF 108, the NEF 109, the NRF 110, the PCF 111, or the UDM 112; or may be a functional entity in the slice architecture, for example, the CSMF 201, the NSMF 201, or the NSSMF 203.

It should be noted that the network device 500 shown in FIG. 15 is merely an implementation of this embodiment of this application. In actual application, the network device 500 may further include more or fewer components, and this is not limited herein.

An embodiment of this application further provides a chip system 600, including one or more processors 601 and an interface circuit 602, where the processor 601 is connected to the interface circuit 602.

The processor 601 may be an integrated circuit chip and has a signal processing capability. In an implementation process, steps in the foregoing methods may be implemented by using a hardware integrated logic circuit in the processor 601, or by using instructions in a form of software. The processor 601 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 601 may implement or perform the methods and the steps that are disclosed in the embodiments of this application. The general-purpose processor may be a microprocessor, or the processor may be any conventional processor, or the like.

The interface circuit 602 may send or receive data, instructions, or information. The processor 601 may process the data, the instructions, or the other information received through the interface circuit 602, and send, through the interface circuit 602, information obtained after processing.

Optionally, the chip system further includes a memory 603. The memory 603 may include a read-only memory and a random access memory, and provide operation instructions and data for the processor. A part of the memory 603 may further include a non-volatile random access memory (NVRAM).

Optionally, the memory 603 stores an executable software module or a data structure, and the processor 603 may perform a corresponding operation by invoking the operation instructions (the operation instructions may be stored in an operating system) stored in the memory.

Optionally, the chip system may be used in the user equipment or the network device in the embodiments of this application. Optionally, the interface circuit 602 is configured to perform the receiving and sending steps of the user equipment, the first network device, the second network device, or the like in the embodiments shown in FIG. 3 to FIG. 13. The processor 601 is configured to perform the processing steps of the user equipment, the first network device, the second network device, or the like in the embodiments shown in FIG. 3 to FIG. 13. The memory 603 is configured to store data and instructions of the user equipment, the first network device, the second network device, or the like in the embodiments shown in FIG. 3 to FIG. 13.

An embodiment of this application further provides a computer-readable storage medium. The method described in the foregoing method embodiments may be all or partially implemented by using software, hardware, firmware, or any combination thereof. If implemented in software, a function may be stored as one or more instructions or code on the computer-readable medium or transmitted on the computer-readable medium. The computer-readable medium may include a computer storage medium and a communication medium, and may further include any medium capable of transferring a computer program from one place to another place. The storage medium may be any available medium that may be accessed by a computer.

In an optional design, the computer-readable storage medium may include a RAM, a ROM, an EEPROM, a CD-ROM or another optical disc memory, a magnetic disk memory or another magnetic storage device, or any other medium that can be configured to carry or store required program code in a form of an instruction or a data structure and that may be accessed by the computer. In addition, any connection may be appropriately referred to as a computer-readable medium. For example, if software is transmitted from a website, a server, or another remote source by using a coaxial cable, a fiber optical cable, a twisted pair, a digital subscriber line (DSL), or wireless technologies (for example, infrared ray, radio, and microwave), the coaxial cable, the fiber optical cable, the twisted pair, the DSL, or the wireless technologies such as infrared ray, radio and microwave are included in a definition of a medium. Disks and discs used in this specification include compact discs (CDs), laser discs, optical discs, digital versatile discs (DVDs), floppy disks, and Blu-ray discs, where disks typically reproduce data magnetically, and discs reproduce data optically by using lasers. The combination described above should also be included in the scope of the computer-readable medium.

An embodiment of this application further provides a computer program product. The method described in the foregoing method embodiments may be all or partially implemented by using software, hardware, firmware, or any combination thereof. If implemented in software, the method described in the foregoing method embodiments may be implemented entirely or partially in a form of the computer program product. The computer program product includes one or more computer instructions. When the computer program instructions are loaded and executed on a computer, the procedures or functions described according to the foregoing method embodiments are all or partially generated. The computer may be a general-purpose computer, a special-purpose computer, a computer network, a network device, user equipment, or another programmable apparatus.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of the embodiments of this application.

## Claims

1. A network slice management method, comprising:
sending, by user equipment, a network slice creation request message to a first network device, wherein the network slice creation request message carries a first slice type and a first service-level agreement SLA specification requirement, and the network slice creation request message is used to request to create a network slice instance that meets the first SLA specification requirement and the first slice type; and
receiving, by the user equipment, a network slice creation response message from the first network device, wherein the network slice creation response message carries a first identifier, the first identifier is used to determine a first network slice instance corresponding to the first identifier, and the first network slice instance is created by the first network device based on the network slice creation request message.

2. The method according to claim 1, wherein before the sending, by user equipment, a network slice creation request message to a first network device, the method further comprises:
determining, by the user equipment, the first slice type and the first SLA specification requirement; and
querying, by the user equipment, whether a network slice that meets the first slice type and the first SLA specification requirement exists in a dedicated network slice of a user of the user equipment and a public network slice, wherein the dedicated network slice of the user comprises a network slice that is created by the user and that provides a service only for the user; and
the sending, by user equipment, a network slice creation request message to a first network device comprises:
sending, by the user equipment, the network slice creation request message to the first network device if the network slice that meets the first slice type and the first SLA specification requirement does not exist in the dedicated network slice of the user and the public network slice.

3. The method according to claim 1 or 2, wherein after the receiving, by the user equipment, a network slice creation response message from the first network device, the method further comprises:
sending, by the user equipment, a network slice update request message to the first network device, wherein the network slice update request message carries the first identifier and a second SLA specification requirement, and the network slice update request message is used to request to update the first network slice instance based on the second SLA specification requirement.

4. The method according to any one of claims 1 to 3, wherein after the receiving, by the user equipment, a network slice creation response message from the first network device, the method further comprises:
sending, by the user equipment, a network slice deletion request message to the first network device, wherein the network slice deletion request message carries the first identifier, and the network slice deletion request message is used to request to delete the first network slice instance.

5. The method according to any one of claims 1 to 4, wherein
the sending, by user equipment, a network slice creation request message to a first network device comprises:
sending, by the user equipment, the network slice creation request message to the first network device by using a second network device; and
the receiving, by the user equipment, a network slice creation response message from the first network device comprises:
receiving, by the user equipment, the network slice creation response message from the first network device by using the second network device.

6. The method according to any one of claims 1 to 5, wherein the second network device comprises a network exposure function NEF entity, a service provisioning gateway SPG, an access and mobility management function AMF entity, a communication service management function CSMF entity, a slice management function NSMF, or a slice subnet management function NSSMF.

7. A network slice management method, comprising:
receiving, by a second network device, a network slice creation request message from user equipment, wherein the network slice creation request message carries a first slice type and a first SLA specification requirement, and the network slice creation request message is used to create a network slice that meets the first slice type and the SLA specification requirement;
sending, by the second network device, the network slice creation request message to a first network device;
receiving, by the second network device, a network slice creation response message from the first network device, wherein the network slice creation response message carries a first identifier, the first identifier is used to determine a first network slice instance corresponding to the first identifier, and the first network slice instance is created by the first network device based on the network slice creation request message; and
sending, by the second network device, the network slice creation response message to the user equipment.

8. The method according to claim 7, wherein the network slice creation request message further carries an authentication code; and after the receiving, by a second network device, a network slice creation request message from user equipment, the method further comprises:
authenticating, by the second network device based on the authentication code, whether a user has authorization for network slice creation; and
the sending, by the second network device, the network slice creation request message to a first network device comprises:
sending, by the second network device, the network slice creation request message to the first network device if authentication succeeds.

9. The method according to claim 7 or 8, wherein after the sending, by the second network device, the network slice creation response message to the user equipment, the method further comprises:
receiving, by the second network device, a network slice update request message from the user equipment, wherein the network slice update request message carries the first identifier and a second SLA specification requirement, and the network slice update request message is used to request to update the first network slice instance based on the second SLA specification requirement; and
sending, by the second network device, the network slice update request message to the first network device.

10. The method according to claim 9, wherein after the receiving, by the second network device, a network slice update request message from the user equipment, the method further comprises:
determining, by the second network device, whether the first network slice instance is a dedicated network slice of the user, wherein the dedicated network slice of the user comprises a network slice that is created by the user and that provides a service only for the user; and
the sending, by the second network device, the network slice update request message to the first network device comprises:
sending, by the second network device, the network slice update request message to the first network device if the first network slice instance is the dedicated network slice of the user.

11. The method according to claim 9 or 10, wherein the network slice update request message carries an authentication code; and after the receiving, by the second network device, a network slice update request message from the user equipment, the method further comprises:
authenticating, by the second network device based on the authentication code, whether the user has authorization for network slice update; and
the sending, by the second network device, the network slice update request message to the first network device comprises:
sending, by the second network device, the network slice update request message to the first network device if authentication succeeds.

12. The method according to any one of claims 7 to 11, wherein after the sending, by the second network device, the network slice creation response message to the user equipment, the method further comprises:
receiving, by the second network device, a network slice deletion request message from the user equipment, wherein the network slice deletion request message carries the first identifier, and the network slice deletion request message is used to request to delete the first network slice instance; and
sending, by the second network device, the network slice deletion request message to the first network device.

13. The method according to claim 12, wherein after the receiving, by the second network device, a network slice deletion request message from the user equipment, the method further comprises:
determining, by the first network device, whether the first network slice instance is the dedicated network slice of the user; and
the sending, by the second network device, the network slice deletion request message to the first network device comprises:
sending, by the second network device, the network slice deletion request message to the first network device if the first network slice instance is the dedicated network slice of the user.

14. The method according to claim 12 or 13, wherein the network slice deletion request message carries an authentication code; and after the receiving, by the second network device, a network slice deletion request message from the user equipment, the method further comprises:
authenticating, by the second network device based on the authentication code, whether the user has authorization for network slice deletion; and
the sending, by the second network device, the network slice deletion request message to the first network device comprises:
sending, by the second network device, the network slice deletion request message to the first network device if authentication succeeds.

15. The method according to any one of claims 7 to 14, wherein the sending, by the second network device, the network slice creation request message to a first network device comprises:
sending, by the second network device, the network slice creation request message to the first network device by using a sixth network device, wherein the sixth network device is a communication service management function CSMF entity; and
the receiving, by the second network device, a network slice creation response message from the first network device comprises:
receiving, by the second network device, the network slice creation response message from the first network device by using the sixth network device.

16. User equipment, wherein the user equipment comprises:
a sending unit, configured to send a network slice creation request message to a first network device, wherein the network slice creation request message carries a first slice type and a first service-level agreement SLA specification requirement, and the network slice creation request message is used to request to create a network slice instance that meets the first SLA specification requirement and the first slice type; and
a receiving unit, configured to receive a network slice creation response message from the first network device, wherein the network slice creation response message carries a first identifier, the first identifier is used to determine a first network slice instance corresponding to the first identifier, and the first network slice instance is created by the first network device based on the network slice creation request message.

17. The user equipment according to claim 16, wherein the user equipment further comprises a processing unit;
and before the sending unit sends the network slice creation request message to the first network device, the processing unit is configured to:
determine the first slice type and the first SLA specification requirement; and
query whether a network slice that meets the first slice type and the first SLA specification requirement exists in a dedicated network slice of a user of the user equipment and a public network slice, wherein the dedicated network slice of the user comprises a network slice that is created by the user and that provides a service only for the user; and
that the sending unit sends the network slice creation request message to the first network device comprises:
sending, by the sending unit, the network slice creation request message to the first network device if the network slice that meets the first slice type and the first SLA specification requirement does not exist in the dedicated network slice of the user and the public network slice.

18. The user equipment according to claim 16 or 17, wherein after the receiving unit receives the network slice creation response message from the first network device,
the sending unit is further configured to send a network slice update request message to the first network device, wherein the network slice update request message carries the first identifier and a second SLA specification requirement, and the network slice update request message is used to request to update the first network slice instance based on the second SLA specification requirement.

19. The user equipment according to any one of claims 16 to 18, wherein after the receiving unit receives the network slice creation response message from the first network device,
the sending unit is further configured to send a network slice deletion request message to the first network device, wherein the network slice deletion request message carries the first identifier, and the network slice deletion request message is used to request to delete the first network slice instance.

20. The user equipment according to any one of claims 16 to 19, wherein
that the sending unit sends the network slice creation request message to the first network device comprises:
sending, by the sending unit, the network slice creation request message to the first network device by using a second network device; and
that the receiving unit receives the network slice creation response message from the first network device comprises:
receiving, by the receiving unit, the network slice creation response message from the first network device by using the second network device.

21. The user equipment according to any one of claims 16 to 20, wherein the second network device comprises a network exposure function NEF entity, a service provisioning gateway SPG, an access and mobility management function AMF entity, a communication service management function CSMF entity, a slice management function NSMF, or a slice subnet management function NSSMF.

22. A network device, wherein the network device comprises:
a receiving unit, configured to receive a network slice creation request message from user equipment, wherein the network slice creation request message carries a first slice type and a first SLA specification requirement, and the network slice creation request message is used to create a network slice that meets the first slice type and the SLA specification requirement; and
a sending unit, configured to send the network slice creation request message to a first network device, wherein
the receiving unit is further configured to receive a network slice creation response message from the first network device, wherein the network slice creation response message carries a first identifier, the first identifier is used to determine a first network slice instance corresponding to the first identifier, and the first network slice instance is created by the first network device based on the network slice creation request message; and
the sending unit is further configured to send the network slice creation response message to the user equipment.

23. The network device according to claim 22, wherein the user equipment further comprises a processing unit; the network slice creation request message further carries an authentication code; and after the receiving unit receives the network slice creation request message from the user equipment,
the processing unit is configured to authenticate, based on the authentication code, whether a user has authorization for network slice creation; and
that the sending unit sends the network slice creation request message to the first network device comprises:
sending, by the sending unit, the network slice creation request message to the first network device if authentication succeeds.

24. The network device according to claim 22 or 23, wherein after the sending unit sends the network slice creation response message to the user equipment,
the receiving unit is further configured to receive a network slice update request message from the user equipment, wherein the network slice update request message carries the first identifier and a second SLA specification requirement, and the network slice update request message is used to request to update the first network slice instance based on the second SLA specification requirement; and
the sending unit is further configured to send the network slice update request message to the first network device.

25. The network device according to claim 24, wherein after the receiving unit receives the network slice update request message from the user equipment,
the processing unit is further configured to determine whether the first network slice instance is a dedicated network slice of the user, wherein the dedicated network slice of the user comprises a network slice that is created by the user and that provides a service only for the user; and
that the sending unit sends the network slice update request message to the first network device comprises:
sending, by the sending unit, the network slice update request message to the first network device if the first network slice instance is the dedicated network slice of the user.

26. The network device according to claim 24 or 25, wherein the network slice update request message carries an authentication code; and after the receiving unit receives the network slice update request message from the user equipment,
the processing unit is further configured to authenticate, based on the authentication code, whether the user has authorization for network slice update; and
that the sending unit is further configured to send the network slice update request message to the first network device comprises:
sending, by the sending unit, the network slice update request message to the first network device if authentication succeeds.

27. The network device according to any one of claims 22 to 26, wherein after the sending unit sends the network slice creation response message to the user equipment,
the receiving unit is further configured to receive a network slice deletion request message from the user equipment, wherein the network slice deletion request message carries the first identifier, and the network slice deletion request message is used to request to delete the first network slice instance; and
the sending unit is further configured to send the network slice deletion request message to the first network device.

28. The network device according to claim 27, wherein after the receiving unit receives the network slice deletion request message from the user equipment,
the processing unit is further configured to determine whether the first network slice instance is the dedicated network slice of the user; and
that the sending unit sends the network slice deletion request message to the first network device comprises:
sending, by the sending unit, the network slice deletion request message to the first network device if the first network slice instance is the dedicated network slice of the user.

29. The network device according to claim 27 or 28, wherein the network slice deletion request message carries an authentication code; and after the receiving unit receives the network slice deletion request message from the user equipment,
the processing unit is further configured to authenticate, based on the authentication code, whether the user has authorization for network slice deletion; and
that the sending unit sends the network slice deletion request message to the first network device comprises:
sending, by the sending unit, the network slice deletion request message to the first network device if authentication succeeds.

30. The network device according to any one of claims 22 to 29, wherein that the sending unit sends the network slice creation request message to the first network device comprises:
sending, by the sending unit, the network slice creation request message to the first network device by using a sixth network device, wherein the sixth network device is a communication service management function CSMF entity; and
that the receiving unit receives the network slice creation response message from the first network device comprises:
receiving, by the receiving unit, the network slice creation response message from the first network device by using the sixth network device.

31. A network slice management system, wherein the system comprises a first network device and a second network device, wherein
the second network device is configured to receive a network slice creation request message from user equipment, wherein the network slice creation request message carries a first slice type and a first service-level agreement SLA specification requirement, and the network slice creation request message is used to request to create a network slice instance that meets the first SLA specification requirement and the first slice type;
the second network device is further configured to send the network slice creation request message to the first network device;
the first network device is configured to receive the network slice creation request message from the second network device, and send a network slice creation response message to the second network device, wherein the network slice creation response message carries a first identifier, the first identifier is used to determine a first network slice instance corresponding to the first identifier, and the first network slice instance is created by the first network device based on the network slice creation request message; and the second network device is further configured to receive the network slice creation response message from the first network device; and
the second network device is further configured to send the network slice creation response message to the user equipment.

32. The system according to claim 31, wherein the network slice creation request message further carries an authentication code; and after the second network device is configured to receive the network slice creation request message from the user equipment,
the second network device is further configured to authenticate, based on the authentication code, whether a user has authorization for network slice creation; and
that the second network device is further configured to send the network slice creation request message to the first network device specifically comprises:
the second network device is further configured to send the network slice creation request message to the first network device if authentication succeeds.

33. The system according to claim 31 or 32, wherein after the second network device is further configured to send the network slice creation response message to the user equipment,
the second network device is further configured to receive a network slice update request message from the user equipment, wherein the network slice update request message carries the first identifier and a second SLA specification requirement, and the network slice update request message is used to request to update the first network slice instance based on the second SLA specification requirement;
the second network device is further configured to send the network slice update request message to the first network device; and
the first network device is further configured to receive the network slice update request message from the second network device.

34. The system according to claim 33, wherein after the second network device is further configured to receive the network slice update request message from the user equipment,
the second network device is further configured to determine whether the first network slice instance is a dedicated network slice of the user, wherein the dedicated network slice of the user comprises a network slice that is created by the user and that provides a service only for the user; and
that the second network device is further configured to send the network slice update request message to the first network device specifically comprises:
the second network device is further configured to send the network slice update request message to the first network device if the first network slice instance is the dedicated network slice of the user.

35. The system according to claim 33, wherein the network slice update request message carries an authentication code; and after the second network device is further configured to receive the network slice update request message from the user equipment,
the second network device is further configured to authenticate, based on the authentication code, whether the user has authorization for network slice update; and
that the second network device is further configured to send the network slice update request message to the first network device comprises:
the second network device is further configured to send the network slice update request message to the first network device if authentication succeeds.

36. The system according to claim 31 or 32, wherein after the second network device is further configured to send the network slice creation response message to the user equipment,
the second network device is further configured to receive a network slice deletion request message from the user equipment, wherein the network slice deletion request message carries the first identifier, and the network slice deletion request message is used to request to delete the first network slice instance;
the second network device is further configured to send the network slice deletion request message to the first network device; and
the first network device is further configured to receive the network slice deletion request message from the second network device.

37. The system according to claim 36, wherein after the second network device is further configured to receive the network slice deletion request message from the user equipment,
the second network device is further configured to determine whether the first network slice instance is a dedicated network slice of the user; and
that the second network device is further configured to send the network slice deletion request message to the first network device specifically comprises:
the second network device is further configured to send the network slice deletion request message to the first network device if the first network slice instance is the dedicated network slice of the user.

38. The system according to claim 36, wherein the network slice deletion request message carries an authentication code; and after the second network device is further configured to receive the network slice deletion request message from the user equipment,
the second network device is further configured to authenticate, based on the authentication code, whether the user has authorization for network slice deletion; and
that the second network device is further configured to send the network slice deletion request message to the first network device specifically comprises:
the second network device is further configured to send the network slice deletion request message to the first network device if authentication succeeds.

39. The system according to any one of claims 31 to 38, wherein that the second network device is configured to send the network slice creation request message to the first network device specifically comprises:
the second network device is configured to send the network slice creation request message to the first network device by using a sixth network device, wherein the sixth network device is a communication service management function CSMF entity; and
that the second network device is further configured to receive the network slice creation response message from the first network device specifically comprises:
the second network device is further configured to receive the network slice creation response message from the first network device by using the sixth network device.

40. The system according to any one of claims 31 to 39, wherein the second network device comprises a network exposure function NEF entity, a service provisioning gateway SPG, an access and mobility management function AMF entity, a communication service management function CSMF entity, a slice management function NSMF, or a slice subnet management function NSSMF.

41. A computer-readable medium, configured to store one or more programs, wherein the one or more programs are executed by one or more processors, the one or more programs comprise instructions, and the instructions are used to perform the method according to any one of claims 1 to 6 or any one of claims 7 to 15.
